# FASCICULE DE BREVET EUROPEEN

(11) **EP 0 971 552 B1**
(45) Date de publication et mention de la délivrance du brevet: **28.09.2005**
(21) Numéro de dépôt: 99401733.3
(22) Date de dépôt: 09.07.1999
(51) Int. Cl.: H04Q 7/36

(54) **Equilibrage de la charge de trafic dans un système de radiocommunication cellulaire**
Verkehrslastverteilung in einem zellularen Funkkommunikationssystem
Traffic load balancing in a cellular radiocommunication system

(30) Priorité: 10.07.1998 FR 9808949
(43) Date de publication de la demande: 12.01.2000
(73) Titulaire: FRANCE TELECOM, 75015 Paris (FR)
(72) Inventeur: Veyres, Camille, Cabinet Ballot-schmit, 75116 Paris (FR)
(74) Mandataire: Ballot, Paul Denis Jacques

(56) Documents cités:
- WO-A-97/14260
- WO-A-97/46038
- WO-A-98/16029
- WO-A-99/03289
- US-A- 4 670 899
- US-A- 5 038 399

## Description

La présente invention se rapporte à un système de radiocommunication cellulaire, notamment un système de radiocommunication GSM 900 ou DCS 1800.

Dans la suite, et à moins qu'il n'en soit disposé autrement, on considère l'exemple non limitatif d'un système de radiocommunication de type GSM 900. Les initiales GSM sont mises pour "Global System for Mobiles", ce qui, en anglais, signifie "Système Global pour les Mobiles".

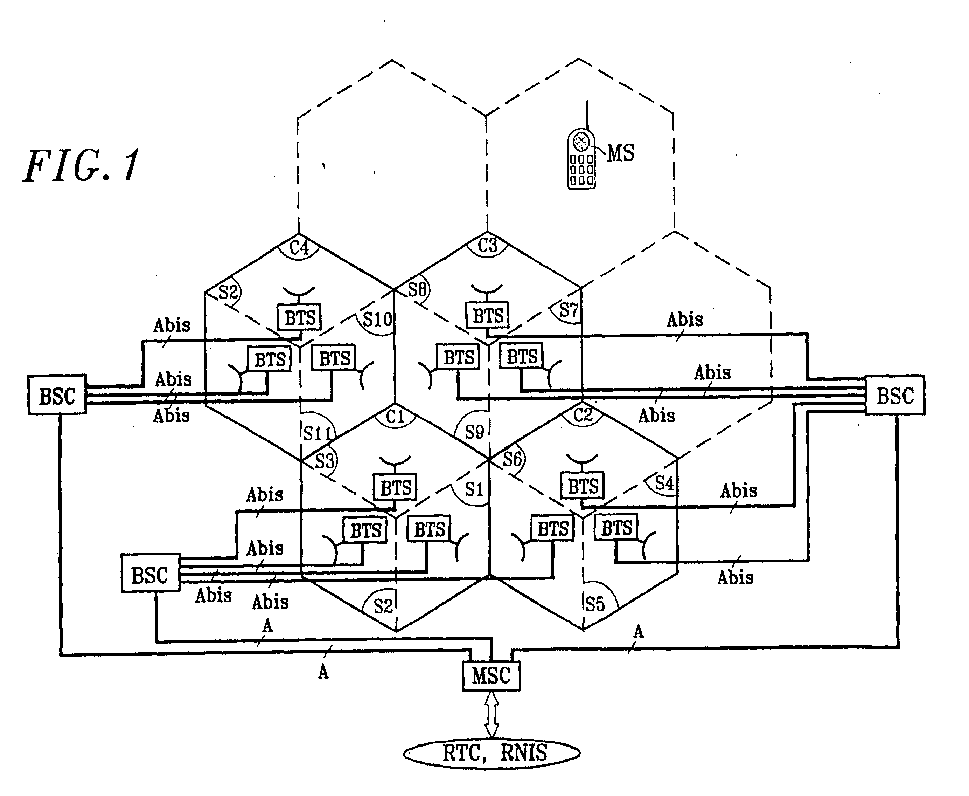

Un tel système (figure 1) comprend des stations mobiles et des moyens de communication fixes.

Les stations mobiles sont les équipements physiques utilisés par les usagers du système. Il s'agit notamment des appareils notés MS à la figure 1 et qui peuvent être des stations montées en véhicule, des stations portables, ou des téléphones portatifs.

Les moyens de communication fixes comprennent des stations de base (Base Transmitter Station, en anglais) ci-après appelées BTS, pour échanger (émission et réception) des signaux de parole ou de données avec les stations mobiles.

Plus exactement, les BTS assurent une fonction de modulation/démodulation de porteuses radioélectriques par ces signaux de parole ou de donnée, et une fonction de transposition et de multiplexage/démultiplexage de ces porteuses radioélectriques dans la bande allouée à l'opérateur.

A cet effet, chaque BTS comprend des moyens matériels et logiciels permettant l'échange de signaux radioélectriques avec les stations mobiles se trouvant dans sa zone de couverture, dans chacun des deux sens possibles.

Notamment, chaque BTS comprend des émetteurs/récepteurs en nombre égal au nombre de porteuses radioélectriques utilisées par la BTS. Dans la terminologie des systèmes GSM 900 et dans la suite, ces équipements sont appelés TRX.

De plus, chaque BTS est reliée à au moins une antenne réalisant l'interface avec l'air. En outre, des équipements fixes d'émission/réception radioélectrique assurent l'amplification de puissance et le couplage aux antennes pour la transmission des porteuses modulées. Dans la suite, ces équipements sont appelés relais.

La zone de couverture d'une BTS, c'est-à-dire la zone géographique dans laquelle les communications avec les stations mobiles sont transmises par l'intermédiaire de cette BTS, est appelée zone de BTS ou secteur. L'aire géographique couverte par le système de radiocommunication est ainsi segmentée en un réseau de secteurs, dit aussi "réseau mobile".

Les moyens de communication fixes du système comprennent aussi des contrôleurs de stations de base (Base Stations Controller, en anglais), ci-après appelés BSC, assurant une fonction de commande et de contrôle des BTS. Chaque BTS est reliée à un BSC. Chaque BSC peut être relié à une ou plusieurs BTS pour les commander et les contrôler.

Les moyens de communication fixes comportent enfin des commutateurs de services mobiles (Mobiles Services Commutator, en anglais), ci-après appelés MSC, assurant toutes les fonctions de commutation nécessaires pour les stations mobiles situés dans une partie, appelée zone de MSC, de la zone géographique couverte par le système. Dit autrement, un MSC est un autocommutateur de téléphonie. Il est relié à un ou des réseaux de télécommunication fixes, tels que le réseau téléphonique commuté (RTC) conçu pour le transport de la parole, ou le réseau numérique d'intégration de service (RNIS) conçu pour le transfert de la parole et de données. Il assure et met à jour la localisation des stations mobiles et applique les procédures prévues pour l'acheminement des communications en prenant en compte la nature mobile des usagers.

L'interface entre un MSC et un BSC est appelée interface A et l'interface entre un BSC et une BTS est appelée interface Abis. Ce sont des liaisons filaires (paires torsadées en cuivre) supportant un débit numérique de l'ordre de 2 Mbits/s (mégabits par seconde). Ces interfaces sont normalisées de manière à permettre l'assemblage d'équipements de diverses origines.

Le document WO-A-97-14260 décrit un réseau cellulaire du type « overlay-underlay ». Le spectre disponible est partagé en deux groupes. Des fréquences à taux de ré-emploi normal (fréquences normales) et des fréquences à taux de ré-emploi supérieur (fréquences super).

Ce réseau comprend une pluralité de cellules. Chaque cellule présente un relais qui lui est propre. Chaque cellule présente également une BTS. La zone couverte par le réseau est couverte par deux couches séparées :
- une couche supérieure de cellules contiguës utilise les fréquences normales et est destinée aux communications se trouvant en limite de cellule. Les basculements entre les cellules de la couche supérieure sont effectués de façon connue ;
- une couche inférieure de cellules forme des îlots non contigus et utilise les fréquences super afin de communiquer avec les mobiles qui se trouvent à proximité de la BTS.

Une BTS d'un tel réseau est disposée à la fois dans une cellule de la couche supérieure et dans une cellule de la couche inférieure. Selon des mesures d'interférence réalisées par la BTS, la BTS commute entre son relais de la couche supérieure et son relais de la couche inférieure.

Selon les prescriptions de la norme GSM 05-05 un système ne peut utiliser que des porteuses se situant dans une première bande de fréquences comprise entre 890 et 915 MHz mégahertz) pour le sens réseau mobile vers réseau fixe (appelé voie montante) et dans une seconde bande de fréquence comprise entre 935 et 960 MH pour le sens réseau fixe vers réseau mobile (appelé voie descendante).

Dans chacune de ces deux bandes, les systèmes ne peuvent en fait utiliser que 124 porteuses monofréquences déterminées, espacées avec un pas de 200 KHz (kilohertz). Dans une aire géographique déterminée, l'usage exclusif de telle ou telle porteuse par tel ou tel système est réglementé par l'administration publique. Bien entendu, si plusieurs systèmes gérés par des opérateurs différents coexistent dans une même aire géographique, chaque opérateur veille à n'émettre que sur celles des 124 porteuses qui lui sont réservées, de manière à ne pas perturber les porteuses réservées à ses concurrents.

Une porteuse de la première bande et une porteuse de la seconde bande sont associées pour constituer un circuit téléphonique bidirectionnel. L'écart entre ces deux porteuses est appelé écart duplex. Cet écart est constant. Pour un système de type GSM 900, il vaut 45 MHz.

En raison du nombre limité de circuits téléphoniques bidirectionnels ainsi disponibles, chaque opérateur utilise en fait une même porteuse dans plusieurs secteurs suffisamment éloignés les uns des autres pour éviter tout risque d'interférences entre les circuits téléphoniques correspondants.

Plus précisément, un groupe de plusieurs porteuses de la première bande (et leurs porteuses associées de la seconde bande) sont affectées à un groupe de plusieurs BTS dont les secteurs sont géographiquement non contigus.

Par exemple, dans le système de l'opérateur FRANCE TELECOM, auquel sont réservées soixante deux porteuses dans chaque bande (soit un spectre de 12 MHz de largeur) les porteuses sont réparties en douze groupes de cinq porteuses (deux porteuses n'étant pas utilisées). Dans la suite, on utilisera l'expression "couleur" pour désigner un tel groupe de porteuses. Ces douze couleurs sont respectivement affectées à douze secteurs géographiquement contigus.

A la figure 1, on a représenté schématiquement les moyens essentiels d'un système de radiocommunication cellulaire selon l'art antérieur.

Trois BTS, dont les secteurs S1, S2 et S3 sont adjacents, sont regroupées sur un même site appelé base, et sont reliées respectivement à trois antennes directives orientées selon des directions à 120° l'une de l'autre. Ces trois secteurs forment une cellule C1. De même trois autres cellules C2, C3 et C4 sont formées chacune de trois secteurs couvrant chacun un angle de 120°, respectivement S4-S6, S7-S9, et S10-S12. On parle de cellules tri-sectorielles. A centre de chaque cellule se trouve une base abritant les BTS des trois secteurs de la cellule.

Une cellule est communément représentée de façon stylisée par un hexagone, ainsi qu'on peut le voir à la figure 1.

L'aire géographique couverte par le système de radiocommunication est donc, dans cet exemple, segmentée en un réseau de cellules tri-sectorielles, avec un plan d'attribution des fréquences constitué par un motif de base à quatre cellules et douze couleurs reproduit autant de fois que nécessaire, par abus de langage, les termes "secteur" et "cellule" seront indistinctement utilisés dans la suite pour désigner une zone de BTS.

Une BTS donnée utilise donc les fréquences d'une seule et unique couleur pour les communications avec les mobiles présents dans la cellule à laquelle elle est associée. Les BTS comprennent donc autant de TRX qu'il y a de porteuses dans la couleur. Dans l'exemple ci-dessus, les BTS comprennent cinq TRX.

En outre, l'axe des temps est divisé en intervalles de temps réguliers (Time Slots, en anglais), ci-après appelés IT, dont la durée est égale à 0,577 ms. Huit tels intervalles consécutifs forment une trame. Une trame dure donc 4,6 ms. Au sein d'une trame, les IT sont repérés par un numéro de zéro à sept. La suite récurrente des IT portant le même numéro constitue un canal physique pour la transmission de données ou de la parole. En pratique, seuls sept IT en moyenne par trame sont disponibles pour la transmission des données utiles. C'est donc sept canaux physiques qui sont disponibles par porteuse.

Bien évidemment, cette division de l'axe des temps en intervalles s'applique aussi bien à la voie montante qu'à la voie descendante. Cependant la numérotation des IT pour la voie montante et la numérotation des IT pour la voie descendante sont décalées de trois unités. De la sorte, on s'assure qu'une station mobile ne peut émettre et recevoir en même temps.

On constate ainsi un double entrelacement temporel et fréquentiel des canaux physiques pour la voie montante et des canaux physiques associés pour la voie descendante.

De plus, la plupart des systèmes de radiocommunication GSM 900 utilisent la possibilité, prévue par la norme GSM, d'un saut de fréquence lent. Comme on le sait, cette fonctionnalité consiste à modifier de façon périodique (à chaque trame, soit toutes les 4,6 ms) l'attribution des fréquences aux couleurs des différents secteurs du motif de base du réseau mobile. Ce saut de fréquence permet de répartir entre plusieurs canaux physiques l'effet d'un éventuel brouilleur qui perturberait une fréquence déterminée. Cette répartition se traduit par une homogénéisation des valeurs du rapport signal/bruit des différents canaux physiques et, par conséquent, par une amélioration de la qualité globale des radiocommunications.

Dans chaque IT, on émet un train de 148 bits comprenant 114 bits d'informations utiles. Les bits restant sont des bits de service, notamment de signalisation et de synchronisation. Les bits de service comprennent notamment une séquence de 26 bits disposée en milieu de train, dite "séquence d'apprentissage", choisie pour ses bonnes propriétés d'autocorrélation. Cette séquence a pour fonction de permettre la synchronisation du canal physique malgré les phénomènes de trajets multiples inhérente à toute propagation radio-électrique.

Différents types de canaux logiques sont multiplexés sur les canaux physiques. En effet, ces canaux logiques sont de deux types: d'une part des canaux de trafic (Trafic Channel, en anglais), ci-après appelés canaux TCH, et d'autre part des canaux de contrôle ou de signalisation (Control Channel, en anglais), ci-après appelés canaux CCH.

Les premiers servent à la transmission de la parole ou de données produites par les usagers (les porteuses qui supportent les canaux TCH sont parfois appelées porteuses de conversation ou porteuses de trafic).

Les seconds servent à la transmission d'informations nécessaires à la gestion du système. Notamment, les canaux CCH comprennent un canal diffusé (Broadcast Control Channel, en anglais), ci-après canal BCCH, qui fournit aux stations mobiles des informations relatives à la cellule dans laquelle elles se trouvent ainsi qu'aux cellules voisines. Le canal BCCH est un canal dans le sens réseau fixe vers réseau mobile. La porteuse qui supporte ce canal, dite ci-après "porteuse F_{BCCH}" ou "porteuse balise", est émise à fréquence constante et sans régulation de niveau (en fait, elle est émise à la puissance maximum autorisée pour la cellule).

Une porteuse F_{BCCH} est associée à chaque secteur du motif de base. Un réseau mobile à motif de base à n secteurs nécessite donc au moins n porteuses F_{BCCH}. De plus, les porteuses F_{BCCH} ne sont pas soumises au saut lent de fréquence.

Chaque station mobile comporte des moyens pour mesurer le niveau de toutes les porteuses F_{BCCH} qu'il lui est imposé de mesurer, à savoir la porteuse F_{BCCH} associée à la cellule dans laquelle il se trouve, et les porteuses F_{BCCH} associées aux cellules adjacentes à cette cellule. Les stations mobiles comportent aussi des moyens pour envoyer un rapport de mesure après calcul d'une moyenne sur un certain nombre de mesures, ce rapport incluant des informations sur la qualité des informations reçues en vue de permettre le basculement intercellulaire (hand-over, en anglais) nécessité par la nature mobile des usagers. La qualité des informations reçues est déterminée par le calcul d'un taux d'erreur.

Dans la suite, on s'intéressera à la capacité et au rendement des systèmes de radiocommunication cellulaire. C'est pourquoi il est utile de rappeler la définition d'un Erlang. Il s'agit d'une unité de mesure du trafic, c'est-à-dire du quotient par 60 du nombre de minutes de communication par heure pour le faisceau de circuits téléphoniques. On distingue d'une part le trafic que le système peut écouler à un instant donné ou capacité installée, et d'autre part le trafic facturé, c'est-à-dire le nombre moyen de minutes de communication taxées par minute. Ces deux grandeurs s'expriment en Erlang(s).

Le rapport entre le nombre d'Erlangs "installés" et le nombre moyen d'Erlangs facturés donne une indication de la rentabilité des investissements réalisés pour la mise en place du système.

Dans les systèmes connus, les équipements d'une BTS sont installés dans une base qui est un local situé au coeur de la cellule par exemple dans le sous-sol d'un immeuble. La base est reliée à un BSC par l'intermédiaire de liaisons Abis. Les TRX, et la (ou les) antenne(s) sont installés dans, respectivement à proximité immédiate de ce local. Les équipements équivalents de toutes les BTS se trouvent donc géographiquement dispersés, et affectés à la gestion des communications dans des zones géographiques déterminées différentes (les cellules), dont les contours sont déterminés, de manière figée, par la portée des signaux radioélectriques émis par la (ou les) antenne(s).

En zone urbaine, les cellules ont sensiblement la même taille et chaque BTS offre le même nombre maximum de canaux physiques (approximativement égal au nombre de porteuses de conversation dans la couleur x 7 IT). Il faut donc considérer que la densité de la capacité installée est constante dans toute l'aire géographique couverte par le système. Dit autrement, les ressources du système que constituent les canaux physiques offerts par les BTS sont affectées dans l'espace de manière homogène, et figée par le nombre de TRX par cellule.

Or, en pratique, la demande de trafic est fortement inhomogène dans l'espace et variable dans le temps. Ainsi par exemple, on peut être confronté à la nécessité de répondre à une demande de trafic très importante pour une cellule dans laquelle se trouve une salle de spectacle, à la fin d'une représentation, lorsque les spectateurs sortent tous à peu près en même temps. On constate en pratique que 70% du trafic à un moment donné se trouve concentré sur 30% des BTS. Et seules 10 à 20% des BTS supportent à un moment donné un trafic taxé appréciable. Le rendement des équipements installés est donc égal à 2,3 (70/30), ce qui est faible. A l'inverse, la probabilité n'est pas négligeable que des communications ne puissent être acheminées en raison de la saturation locale et ponctuelle dans le temps des équipements de BTS installés.

Le but de la présente invention est de proposer un système de radiocommunication cellulaire permettant une utilisation plus rentable des équipements de BTS fixes installés.

Ce but est atteint, selon l'invention, en proposant un nouveau concept d'architecture des systèmes de radiocommunications cellulaire.

En effet, l'invention propose un système de radiocommunications cellulaire, notamment un système GSM 900 ou DCS 1800, dans lequel :
- l'aire géographique couverte par le système est divisée en zones élémentaires (ou microsecteurs), de préférence de faibles dimensions, à chaque microsecteur étant attribué un groupe de porteuses radioélectriques (ou couleur) selon un plan d'attribution des fréquences déterminé;
- des groupes de stations de base (ou BTS) assurant une fonction de modulation/démodulation, de transposition et de multiplexage/démultiplexage des porteuses de chaque couleur, sont physiquement installées sur un même site (ou tête de réseau);
- des équipements fixes d'amplification d'émission/réception radioélectriques (ou relais locaux) sont installés dans chaque microsecteur et sont reliés à la tête de réseau par des moyens de liaison adaptés;
- des moyens de gestion du système comprenant des moyens d'observation du trafic pour rendre compte de la charge des BTS ainsi qu'un répartiteur commandé pour relier les BTS aux relais locaux par l'intermédiaire des moyens de liaison, de manière à égaliser la charge des BTS d'un même groupe.

La différence avec les systèmes de radiocommunications cellulaire connus réside dans la notion de zone de BTS. Dans les systèmes connus, la zone de BTS est figée. Il s'agit de la zone géographique au coeur de laquelle se trouve la BTS, les BTS étant disséminées dans l'ensemble des cellules de l'aire géographique couverte par le système. Dans le système selon l'invention, la zone de BTS est variable.

En effet, selon l'invention au contraire, la zone de BTS peut correspondre à un unique microsecteur dans lequel le trafic est appréciable, ou bien à plusieurs microsecteurs dans chacun lesquels le trafic est peu important mais dont le trafic cumulé est appréciable. Dans le premier cas, les ressources offertes par la BTS sont concentrées sur un unique microsecteur. Le système peut alors y écouler un trafic important. Dans le second cas, les ressources offertes par la BTS sont partagées entre plusieurs microsecteurs.

Dit autrement, grâce à l'invention, la densité de trafic offert peut être inhomogène dans l'espace, et variable dans le temps, pour répondre aux variations de la demande de trafic. En effet, les moyens de gestion du système ont pour fonction de répartir les ressources disponibles constituées par les canaux physiques offerts par les BTS en fonction du trafic réel dans les microsecteurs. Les disparités de charge des BTS sont ainsi éliminées ou à tout le moins fortement réduites.

Selon un premier avantage de l'invention, il est alors possible, pour un trafic global dans l'aire géographique couverte par le système équivalent, d'installer moins de BTS dans la tête de réseau du système selon l'invention qu'il faudrait en installer dans les cellules ou microcellules d'un système selon l'art antérieur. Sachant que, dans un système de radiocommunication cellulaire, les équipements des BTS sont parmi les plus coûteux, on peut apprécier l'économie qui en résulte pour l'opérateur.

Selon un autre avantage de l'invention, les BTS étant physiquement regroupées en un même site, la surveillance, l'entretien et la réparation des équipements qu'elles contiennent sont facilités. En effet, une petite équipe de quelques techniciens peuvent, sur place, y assurer toutes les opérations de maintenance. Ces techniciens n'ont plus besoin de se rendre sur le terrain pour intervenir sur les équipements de BTS en cas de panne.

En outre, selon un autre avantage de l'invention, les BTS étant physiquement regroupées en un même site, elles peuvent facilement être synchronisées entre elles. Or, on sait que la synchronisation des BTS apporte un avantage équivalent à une amélioration de l'ordre de 1 à 3 dB du rapport moyen porteuse à bruit (rapport C/N), un seul canal physique au lieu de deux étant perturbé par un éventuel brouilleur. Un tel brouilleur est par exemple constitué par une station mobile émettant la fréquence de la porteuse du canal physique considéré. En effet, ce brouilleur serait en coïncidence partielle avec deux IT dans chaque trame sans cette synchronisation, au lieu de un seul IT avec synchronisation.

Un autre avantage de l'invention réside dans la possibilité d'avoir une propagation radioélectrique dans les microsecteurs de nature microcellulaire, qui soit efficace en termes de rendement spectral.

Pour répondre à l'augmentation croissante du nombre des abonnés des services de radiocommunication cellulaire, on a en effet déjà proposé des systèmes ayant un réseau mobile dont les cellules sont de taille réduite (on parle classiquement de microcellules) et ayant un plan de fréquence dont le motif de base comporte moins de couleurs. On parle alors de configuration microcellulaire du réseau mobile, la propagation radioélectrique dans les microcellules étant dite de nature microcellulaire.

Dans une configuration microcellulaire en effet, les signaux sont émis à faible puissance (de l'ordre de 20 à 300 milliwatts) par des boîtiers d'émission/réception disposés à quelques mètres au dessus du sol (typiquement 7 mètres), par exemple en façade des immeubles. Ces boîtiers d'émission/réception sont appelés microbases car ils remplissent toutes les fonctions d'une BTS. La portée d'un tel signal n'excède pas quelques centaines de mètres. En sorte que, en milieu urbain, une microcellule correspond donc à une zone de quelques centaines de mètres de large , soit à un groupe d'immeubles dans une ou deux rues. On parle aussi d'émission "au dessous des toits", par opposition à l'émission "au dessus des toits" des configurations macrocellulaires classiques dans lesquelles les antennes sont placées à l'extrémité d'un mât de 20 ou 30 mètres de haut. Une macrocellule est un zone de quelques centaines de mètres à quelques kilomètres de large.

Le bon découplage entre microcellules dû à la fonction d'écran remplie par les immeubles et au faible niveau de puissance des signaux radioélectriques émis, permet une réutilisation des porteuses radioélectriques plus rapprochées dans l'espace. C'est pourquoi le plan d'attribution des fréquences peut comporter un motif de base avec moins de couleurs, typiquement 6 couleurs au lieu de 12 pour les configurations macrocellulaires. Corrélativement, chaque couleur pourrait comporter un nombre plus élevé de porteuses radioélectriques différentes, typiquement six à huit sur trente-cinq porteuses affectées à cette configuration, au lieu de cinq sur soixante porteuses pour les configurations macrocellulaires. Le nombre de circuits téléphoniques disponibles dans une zone de taille identique est donc plus important qu'en configuration macrocellulaire.

On notera qu'un système peut posséder une configuration microcellulaire superposée à une configuration macrocellulaire, dans la limite bien entendu d'un choix des plans d'attribution des fréquences respectant le nombre maximum de porteuses réservées à l'opérateur. Dit autrement, un réseau de microcellules se superpose à un réseau de macrocellules, les réseaux se partageant les ressources (porteuses radioélectriques) réservées à l'opérateur.

Les ressources correspondant à la configuration microcellulaire sont préférentiellement attribuées aux stations mobiles se déplaçant lentement, notamment aux téléphones portatifs des piétons. Par contre, les ressources correspondant à la configuration macrocellulaire sont préférentiellement affectées aux stations mobiles se déplaçant plus rapidement, notamment aux téléphones portables installés à bord des véhicules en mouvement, de manière à limiter la fréquence des basculements intercellulaires (hand-over).

Lorsqu'une station mobile émet une demande d'allocation de ressources en vue de l'établissement d'une communication, le système lui attribue un canal logique TCH sur une porteuse d'une couleur attribuée, selon le plan d'attribution des fréquences, à une microbase de la configuration microcellulaire. Si plusieurs basculements intercellulaires consécutifs sont effectués pour cette station mobile en des temps rapprochés, le système lui attribue un nouveau canal sur une porteuse d'une couleur attribuée à une BTS de la configuration macrocellulaire.

Toutefois, dans les configurations microcellulaires déjà proposées, le nombre de porteuses par microcellule est très faible, à savoir une ou deux porteuses. En effet, des contraintes d'encombrement dans les boîtiers d'émission/réception des microbases empêchent que ceux-ci comprennent plus de un ou deux TRX.

Dans le premier cas, la porteuse est obligatoirement une porteuse balise. Ceci signifie qu'il ne peut y avoir de saut lent de fréquence. En conséquence la qualité des transmissions est médiocre.

Dans le second cas, la première porteuse est une porteuse balise (non soumise au saut lent de fréquence) et la seconde est une porteuse de conversation (soumise au saut lent de fréquence). La largeur de spectre consommée est alors égale à 6x2x200 kHz soit 2,4 MHz.

Si seuls les canaux physiques de la seconde porteuse sont utilisés pour la transmission de signaux de parole ou de données, le nombre d'Erlangs disponibles est (pour 7 IT) égal à 2,5. Le rendement spectral n'est que de 1 Erlang par MHz.

Si les canaux physiques des deux porteuses sont utilisés pour la transmission de signaux de parole ou de données, le nombre d'Erlangs disponibles par microcellule (sachant que les deux porteuses offrent 2x7=14 IT) est égal à 6. Le rendement spectral du système est alors de 2,5 Erlang par MHz. Mais les conservations transmises sur les canaux physiques de la porteuse balise peuvent être fortement brouillées, du fait de l'absence de sauts de fréquence de cette porteuse.

Les rendements ci-dessus sont à rapprocher du rendement spectral d'un système ayant une configuration macrocellulaire tel que le système ITINERIS (marque déposée de FRANCE TELECOM), qui (avec 5x7=35 IT par secteur) est égal à 25 Erlangs par secteur pour une bande de 12 MHz, soit 2,1 Erlang par MHz.

On constate alors qu'une configuration microcellulaire avec l'architecture des systèmes de radiocommunication cellulaires connus, si elle apporte des avantages notamment en termes de rendement spatial (nombre d'Erlangs disponibles par km²), n'apporte pas d'amélioration en termes de rendement spectral (nombre d'Erlang par MHz).

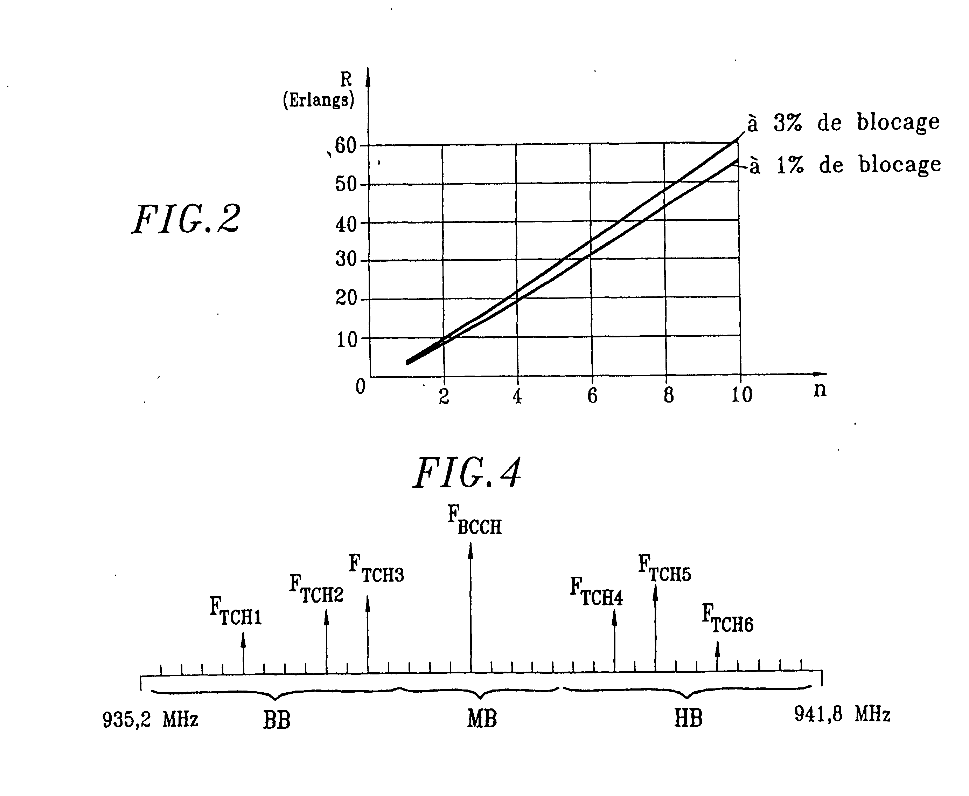

Ceci provient d'un principe connu sous le nom de "loi d'Erlang" qui énonce que le rendement spectral R (exprimé en Erlangs) d'un faisceau de canaux physiques croît rapidement avec le nombre n de canaux du faisceau, ainsi qu'on peut le voir illustré sur la courbe du graphique de la figure 2. Sur cette figure, on a représenté la courbe de l'évolution de R en fonction de n dans deux cas distincts, respectivement à 3% et à 1% de blocage.

Cependant, c'est un autre avantage de l'architecture du système de radiocommunication cellulaire selon l'invention que de permettre d'excellents résultat, en termes de rendement spectral, avec une configuration microcellulaire.

C'est pourquoi, selon une autre caractéristique de l'invention, la propagation radioélectrique dans les microsecteurs est de nature microcellulaire. Ceci signifie que la puissance d'émission des porteuses par les équipements fixes d'émission/réception est faible (de l'ordre de 20 à 300 milliwatts) en sorte qu'un microsecteur est une zone faibles dimensions, soit avec un rayon de 100 à 300 mètres. En milieu urbain dense, un microsecteur correspond donc à une ou deux rues et à 400 logements au plus.

En conséquence, le plan de fréquence ne comporte qu'un nombre réduit de couleurs différentes. En pratique il comporte six, cinq, voire quatre couleurs. Il en résulte un bon rendement spatial (nombre d'Erlangs par km²) pour le système.

Dans les systèmes connus ayant une configuration microcellulaire, on a vu que les microbases ne comportent qu'un ou deux TRX à cause de contraintes d'encombrement, et n'offrent donc qu'une ou deux porteuse pour chaque microcellule. A l'inverse, les BTS du système selon l'invention ne sont pas soumises à de sévères contraintes d'encombrement. En effet, le site de la tête de réseau où les BTS sont regroupées occupe un local de plusieurs centaines de mètres carrés et l'encombrement des BTS n'y est pas critique. C'est pourquoi, selon une caractéristique de l'invention, le plan de fréquence est tel que une couleur comprend six à huit porteuses de conversation. Une BTS comprend donc six à huit TRX.

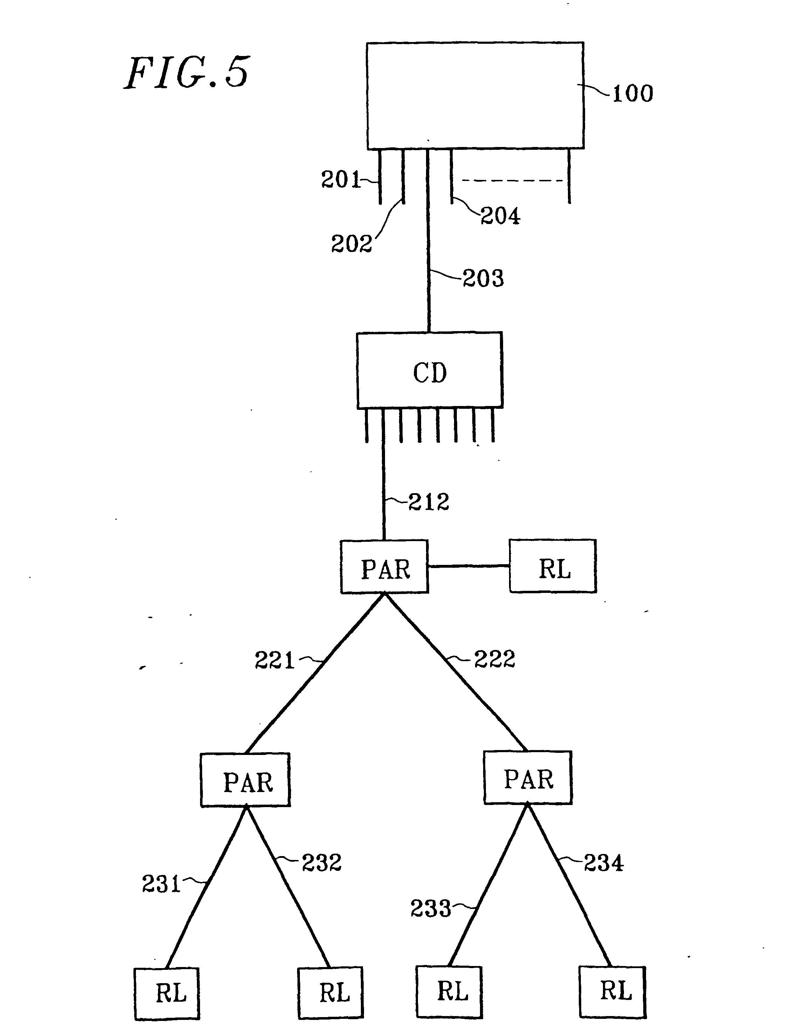

Avec 7 porteuses de conversation par couleur, c'est donc au mieux 7x7=49 IT par BTS soit 37 Erlangs qui sont disponibles (voir figure 2). Or le signal GSM occupe alors une bande de 6,6 MH de large, comme il sera décrit de façon plus détaillée ci-dessous en regard de la figure 4. Le rendement spectral est alors de 5,6 Erlangs/MHz. C'est un rendement bien supérieur à ceux atteints par toutes les configurations microcellulaires des systèmes de radiocommunication cellulaires connus. Avec un plan de répartition des fréquences à quatre couleurs, on espère même parvenir à un rendement de l'ordre de 6 Erlangs/MHz.

D'autres caractéristiques et avantages de la présente invention apparaîtront encore à la lecture de la description qui va suivre. Celle-ci est purement illustrative et doit être lue en regard des dessins annexés sur lesquels on a représenté:
- à la figure 1, déjà analysée: une représentation schématique des moyens essentiels d'un système selon l'art antérieur;
- à la figure 2, également déjà analysée: un graphique illustrant la loi d'Erlang;
- à la figure 3: une représentation schématique des moyens essentiels d'un système selon l'invention;
- à la figure 4: le spectre d'un signal GSM émis par une BTS selon l'invention;
- à la figure 5: un schéma des moyens de liaisons entre la tête de réseau et les relais locaux;
- à la figure 6: le schéma d'un exemple d'organisation de la tête de réseau dans le cas d'un système à 8 BTS par couleur;
- à la figure 7: une baie d'équipements du répartiteur électronique de la tête de réseau.

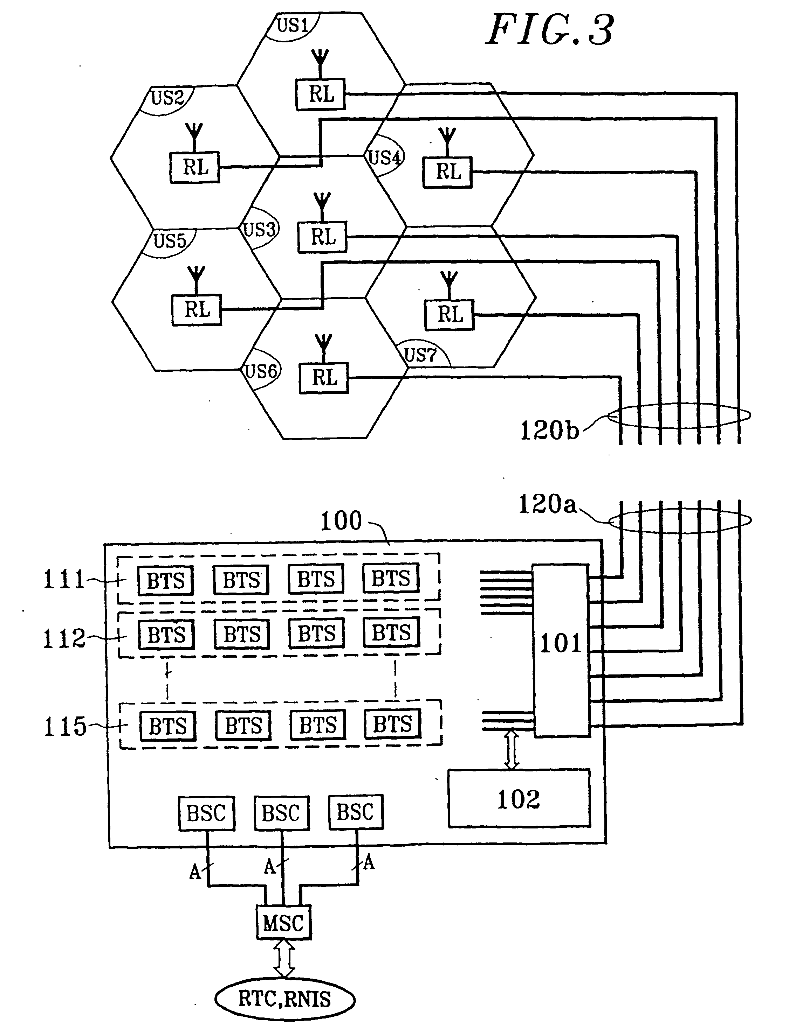

A la figure 3, on a représenté les moyens essentiels d'un système de radiocommunication cellulaire selon l'invention.

L'aire géographique couverte par le système est divisée en des zones élémentaires ou microsecteurs. Ces zones sont de préférence de faibles dimensions, c'est à dire avec un rayon de quelques centaines de mètres, lorsque le système comporte une configuration microcellulaire.

Sur la figure 3, les microsecteurs sont symbolisés par des hexagones par exemple US1 à US7. A chaque microsecteur est attribué un groupe de porteuses radioélectriques, ou couleur, défini selon un plan d'attribution des fréquences déterminé. Ces microsecteurs constituent la plus petite unité de surface (au sens fonctionnel du terme) du réseau mobile.

Les BTS du système selon l'invention assurent une fonction de modulation/démodulation, de transposition et de multiplexage/démultiplexage des porteuses, de la même manière que les BTS des systèmes antérieurs. Néanmoins elles sont dépourvues de moyens d'amplification de puissance et de couplage à (ou aux) antenne(s). En effet, ces moyens sont contenus dans des équipements fixes d'émission/réception radioélectriques sur lesquels on reviendra ci-dessous.

Surtout, les BTS sont physiquement installées sur un même site appelé dans la suite tête de réseau au lieu d'être disséminées dans les cellules du réseau mobile. Elles forment des groupes fonctionnels de BTS, chacun de ces groupes assurant la fonction de modulation/démodulation, de transposition et de multiplexage/démultiplexage des porteuses d'une couleur déterminée. Dit autrement, un groupe de BTS assure la fonction ci-dessus pour les porteuses d'une même couleur, et les groupes de BTS sont physiquement installées sur le même site. Dans la suite, pour désigner les BTS d'un même groupe, on parlera parfois de BTS de même couleur.

Des équipements fixes d'amplification d'émission/réception radioélectriques assurent l'amplification de puissance et le couplage aux antennes (pour la voie descendante) et la réception des signaux GSM (pour la voie montante). On dit parfois que ces équipements réalisent l'interface avec l'air. On les appelle ainsi "interface air". Dans la suite, ces équipements seront aussi appelés relais locaux. Ils sont notés RL à la figure 3. Au-moins un relais local est installé dans chaque microsecteur et est relié à la tête de réseau par des moyens de liaison adaptés 120a-120b.

Comme il sera expliqué plus en détail ci-après, plusieurs canaux téléphoniques, c'est à dire plusieurs signaux GSM délivrés par des BTS distinctes (pour la voie descendante) ou destinés à des BTS distinctes (pour la voie montante), sont multiplexés en fréquence sur ces moyens de liaison 120a-120b. La liaison entre les BTS regroupées en tête de réseau d'une part et les sites de relais locaux d'autre part, n'est donc pas une liaison point à point. Les moyens de liaison sont de ce fait moins coûteux. On verra plus loin quelle peut avantageusement être leur nature exacte.

En outre, le système comprend des moyens 102 d'observation du trafic permettant de rendre compte de la charge des BTS et/ou de celle des microsecteurs pris individuellement. Par charge d'un microsecteur, on entend le trafic (parole et/ou données) des mobiles en communication à travers le relais local RL de ce microsecteur.

De plus, le système comprend aussi un répartiteur électronique 101 commandé pour relier les BTS aux relais locaux par l'intermédiaire des moyens de liaison de manière à égaliser la charge des BTS d'un même groupe. Pour la voie descendante, le répartiteur électronique assure une fonction de sélection d'une BTS pour chaque microsecteur, et de transposition du canal téléphonique correspondant sur un canal de fréquence des moyens de liaison qui est affecté à ce microsecteur. On notera qu'une même BTS peut être reliée à plusieurs relais locaux différents, si le trafic dans les microsecteurs correspondants (auxquels la même couleur est attribuée) est assez faible pour justifier leur regroupement sur la même BTS.

Dit autrement, le répartiteur électronique est commandé de telle manière qu'il permet d'affecter les BTS de chaque groupe à la gestion du trafic dans un ou plusieurs microsecteurs auxquels la couleur correspondante est attribuée, de manière à égaliser la charge des BTS d'un même groupe.

De préférence le répartiteur électronique est, le cas échéant, commandé de manière à relier une BTS à plusieurs relais locaux correspondant à des microsecteurs proches ou fortement couplés (au sens de la propagation radioélectrique). On sait en effet qu'il n'y a pas de brouillage entre les communications supportées par la même BTS puisque, par définition, les porteuses d'une couleur sont de fréquences distinctes. Des brouillages sont par contre à redouter lorsque les communications sont gérées par des BTS différentes mais de même couleur puisque, par définition, les porteuses qu'elles utilisent sont les mêmes. Il est donc avantageux de regrouper sur la même BTS des microsecteurs qui sont proches les uns des autres ou qui sont fortement couplés de par la configuration du terrain.

Ainsi qu'on l'aura compris, le répartiteur électronique est commandé par des moyens logiciels mettant en oeuvre des algorithmes appropriés. Ces moyens logiciels font partie des moyens de gestion du système.

Physiquement, la tête de réseau occupe un local de plusieurs centaines de mètres carrés, situé de préférence en position centrale dans la zone couverte par le système, par exemple au coeur de la ville pour une zone urbaine.

Avantageusement, ce local abrite également les BSC comme visible à la figure 3, et les organes de liaison vers les MSC, voire, pourquoi pas, le ou les MSC. A la figure 3, les interfaces Abis n'ont pas été représentées pour ne pas surcharger le schéma.

Selon une caractéristique avantageuse de l'invention, la propagation radioélectrique dans les microsecteurs est de nature microcellulaire, au sens indiqué en introduction. On a vu en introduction que cela est avantageux car on peut alors utiliser un plan d'attribution des fréquences comprenant un nombre réduit de couleurs différentes.

De fait, l'invention s'applique avantageusement à un système ayant un plan d'attribution des fréquences qui, en microcellulaire, ne comporte que six, cinq, voire quatre couleurs différentes. Comme on l'a montré en introduction, un système selon l'invention ayant une configuration microcellulaire, présente un bon rendement spectral, au contraire des systèmes antérieurement connus ayant une telle configuration microcellulaire.

Néanmoins, cette configuration microcellulaire du système selon l'invention peut bien évidemment être superposée à une configuration macrocellulaire. En outre, le principe de regroupement de BTS en tête de réseau selon l'invention peut aussi s'appliquer à une configuration purement macrocellulaire.

Dans l'exemple de réalisation qui va suivre, on considère un plan de fréquence à cinq couleurs.

Comme il a été dit en introduction, une BTS délivre (dans le sens réseau fixe vers réseau mobile) ou reçoit (dans le sens réseau mobile vers réseau fixe) un signal GSM respectivement à destination ou en provenance des stations mobiles présentes dans la zone de BTS. Ce signal est un signal multifréquence c'est-à-dire dont le spectre comprend plusieurs fréquences de porteuses multipléxées dans la bande utile.

Dans la description qui va suivre, on considère l'exemple d'un signal GSM occupant une bande de fréquence dont la largeur est de l'ordre de 5 à 8 MHz. Les porteuses sont des porteuses GSM.

Parmi ces porteuses, on dénombre une porteuse balise non soumise aux sauts de fréquence et émise à un niveau constant. Cette porteuse est modulée par des signaux de signalisation et/ou de synchronisation.

On dénombre également des porteuses de conversation, soumises aux sauts de fréquence toutes les 4,6 ms. Ces porteuses sont modulées par des signaux d'information et/ou de parole.

Plus particulièrement on considère un signal GSM pouvant contenir sept porteuses réparties sur un certain nombre de positions possibles dans une bande de fréquence comprise entre 935,2 MHz et 941,8 MHz. La largeur de cette bande de fréquence est égale à 6,6 MHz. Les positions possibles dans cette bande sont espacées d'un pas de 200 kHz. On notera que deux porteuses d'un même signal GSM ne peuvent se trouver sur deux telles positions qui sont adjacentes. Dit autrement, les porteuses sont espacées de 400 KHz au moins Cette disposition facilite certaines étapes du traitement des signaux GSM dans le système, notamment des étapes de filtrage sur lesquelles il n'apparait pas utile de s'étendre ici.

A la figure 4, on a représenté le spectre d'un signal GSM à un instant donné. Ce signal a la structure présentée ci-dessus.

Il comprend une porteuse balise, notée F_{BCCH}, située à une position parmi huit positions possibles sur l'axe des fréquences. Ces huit positions possibles se situent de préférence en milieu de la bande utile. La position occupée par la porteuse F_{BCCH} parmi les huit positions possibles ne varie pas au cours du temps, puisque cette porteuse n'est pas soumise aux sauts de fréquence. Cette position dépend de la cellule à laquelle est affectée la BTS considérée, au sein du motif de base du réseau cellulaire.

Le spectre du signal comporte en outre trois porteuses de conversation (notée F_{TCH1}, F_{TCH2}, F_{TCH3}) pouvant respectivement occuper trois positions distinctes parmi douze positions possibles dans la partie basse de la bande utile.

Le spectre comporte enfin trois autres porteuses de trafic (notées F_{TCH4}, F_{TCH5}, F_{TCH6}) pouvant respectivement occuper trois positions distinctes parmi douze positions possibles dans la partie haute de la bande utile.

Ces six porteuses de conversation occupent une position variable dans le temps, en fonction des sauts de fréquence.

La combinaison des positions occupées par les porteuses est déterminée par le plan d'attribution des fréquences défini par l'opérateur, qui résulte des choix impliqués par la recherche de l'utilisation la plus judicieuse des porteuses qui lui sont réservées. Une combinaison de porteuses telle que celle représentée à la figure 4 constitue une couleur au sens indiqué en introduction.

On peut aussi envisager des plans d'attribution des fréquences comprenant un nombre inférieur de porteuses de conversation par couleur, par exemple cinq telles porteuses, ou comprenant un nombre supérieur de telles porteuses. C'est pourquoi, la bande utile du signal GSM peut être comprise entre 5 et 8 MH dans le cas général.

C'est pourquoi également, dans la suite du présent exposé, on appelle canal téléphonique une bande de 8 MHz de large compris entre 934,5 et 942,5 MHz pour la voie descendante et entre 889,5 et 897,5 MHz pour la voie montante, pour la transmission d'un signal GSM (comprenant des porteuses GSM multiplexées) tel que représenté à la figure 4. Comme on le voit, un canal téléphonique de la voie montante et un canal téléphonique de la voie descendante qui lui est associé, sont distants de 45 MHz sur l'axe des fréquences, cet écart représentant l'écart duplex.

Les moyens de liaison entre les BTS et les relais locaux comprennent des liaisons par câble ou fibre optique et/ou des liaisons par câble coaxial. Ces liaisons se prêtent bien au multiplexage de plusieurs canaux téléphoniques. En effet, elles ont une bande passante suffisante pour permettre la transmission simultanée de plusieurs canaux téléphoniques de 8 MHz de large multiplexés en fréquence. En outre on sait installer de telles liaisons, notamment en milieu urbain, dans les conditions techniques et financières acceptables.

Avantageusement, les moyens de liaison entre les BTS et les relais locaux qui sont mis en oeuvre dans l'invention comprennent, au moins partiellement, un réseau pour la transmission de signaux de télévision (souvent appelé réseau câblé ou réseau de télévision par câble). Un tel réseau est déjà existant dans la plupart des villes d'Europe et du monde. Il assure la couverture de toute une ville, quartier par quartier, selon une organisation arborescente.

L'infrastructure câblée étant en place pour son utilisation comme support de transmission des signaux de télévision, l'invention propose donc avantageusement de l'utiliser également dans une nouvelle application, à savoir comme support de transmission des signaux de téléphonie cellulaire.

A cet effet, les canaux téléphoniques sont transposés sur des canaux de fréquence des liaisons par fibre optique et/ou par câble coaxial non occupés par les signaux de télévision. On reviendra plus loin sur ces transpositions.

A la figure 5, on a représenté l'organisation des moyens de liaison 120a-120b du système dans cet exemple de réalisation particulièrement avantageuse. Comme on l'a dit ci-dessus, le réseau de télévision par câble présente une organisation arborescente.

Un certain nombre de fibres optiques telles que 201 à 204 relient la tête de réseau 100 à des centres de distribution (appelés CD dans la suite et aux figures), qui sont dispersés dans l'aire géographique couverte.

Pour la voie descendante, les canaux téléphoniques sont transmis depuis la tête de réseau dans des canaux appropriés sur une fibre optique, à savoir entre 200 et 900 MHz et non occupés par des signaux de télévision. Une fibre optique peut ainsi supporter de l'ordre de 30 canaux téléphoniques de 8 MHz de large. Dit autrement, une fibre optique convient pour la liaison entre la tête de réseau et quelques 30 microsecteurs.

Dans les CD, ces canaux téléphoniques sont ensuite transposés dans des canaux de fréquence disponibles sur des câbles coaxiaux tels que 212. D'un CD partent par exemple 8 câbles coaxiaux. Dans les CD, une première transposition fait passer les signaux multiplexés aux fréquences employées sur le câble coaxial.

Dans la terminologie des systèmes de télévision par câble, la zone de l'aire géographique couverte à partir d'un câble coaxial sortant du CD est appelée secteur coaxial. Dans un mode de réalisation de l'invention, un secteur coaxial de mille logements environ correspond à peu près à trois microsecteurs. En réalité le nombre de microsecteurs reliés par un câble coaxial dépendra de la largeur de bande disponible sur ce câble, et des besoins en trafic.

Chaque câble coaxial sortant d'un CD est relié à un coffret d'amplification et de répartition (appelé PAR dans la terminologie des systèmes de télévision par câble, et référencé ainsi dans la suite et aux figures). Dans ces PAR, les signaux aux fréquences du câble coaxial sont amplifiés au moyen d'amplificateurs tant dans les sens montant que descendant; selon les équipements du réseau câblé, les canaux téléphoniques sont amplifiés et répartis avec les signaux du réseau de télévision par câble, ou en particulier dans le sens montant sur des équipements particuliers couplés par des filtres de branchement.

Les sorties des PAR de premier niveau sont ensuite reliées aux entrées de PAR de second niveau par l'intermédiaire d'autres câbles coaxiaux tels que 221 et 222. Dans les PAR de second niveau et dans certains PAR de premier niveau, les canaux téléphoniques sont démultiplexés et transposés dans la bande GSM. Les signaux GSM sont alors amplifiés une dernière fois avant d'être transmis en entrée des relais locaux RL par l'intermédiaire de câbles coaxiaux tels que 231 à 234 pour être émis dans la zone où se trouve le RL au moyen d'une antenne du relais local.

Les PAR sont par exemple des armoires réparties dans les rues, sur les trottoirs où dans des locaux d'immeubles, à peu près tous les cent mètres. Un PAR et un RL peuvent être physiquement installés sur un même site. Un même coffret de transposition peut alimenter plusieurs antennes, par exemple situées dans des rues différentes, à travers les câbles coaxiaux. Certains de ces coaxiaux peuvent porter et les signaux GSM (entre 890 et 960 MHz) et les signaux du service de télévision par câble (en dessous de 862 MHz).

Comme on l'aura compris, à chaque microsecteur (et coffret de transposition de fréquence) du réseau mobile est associé un canal de fréquence sur un faisceau arborescent de fibres optiques et de câbles coaxiaux. Bien évidemment, lorsque ces fibres optiques et ces câbles coaxiaux servent aussi à la transmission de signaux de télévision, ces canaux de fréquence sont des canaux non occupés par les signaux de télévision.

Avantageusement, le multiplexage des canaux téléphoniques sur les fibres optiques en sortie de la tête de réseau regroupe sur des canaux de fréquence voisins les canaux téléphoniques associés à des microsecteurs desservis par une même arborescence coaxiale (212 figure 5). De cette manière, la transposition des canaux téléphoniques dans les CD depuis les fréquences des fibres optiques vers les fréquences des câbles coaxiaux, et le démultiplexage dans les CD peuvent être réalisés par blocs de canaux téléphoniques au centre de distribution (point de conversion optique/coaxial).

Les groupes de canaux téléphoniques ainsi associés sont disposés dans le spectre de la liaison optique de façon à laisser libre les bandes images de ces groupes (du point de vue de la transposition réalisée dans les CD).

A cet effet le répartiteur électronique 101 (figure 3) comporte des moyens adaptés de transposition et de multiplexage/démultiplexage fréquentiel.

Il reste à décrire un exemple de réalisation possible du répartiteur selon l'invention sachant que les caractéristiques structurelles de celui-ci peuvent varier, notamment selon les types d'équipements et les technologies disponibles, sans que la fonction du répartiteur telle qu'elle a été suffisamment décrite ci-dessus soit modifiée.

On rappelle que la fonction du répartiteur est de relier sélectivement les BTS des groupes de BTS installées en tête de réseau et les relais locaux disséminés dans les microsecteurs. Plus concrètement, les moyens de liaison entre la tête de réseau et les relais locaux étant des liaisons par fibre optique et/ou par câble coaxial, le répartiteur comporte des moyens pour assurer la transposition et le multiplexage/démultiplexage des canaux téléphoniques des BTS sur des canaux de fréquence disponibles sur ces liaisons. Le répartiteur est commandé de manière à égaliser la charge des BTS d'un même groupe.

Dans la suite, on considère l'exemple d'un système comprenant cinq groupes de huit BTS chacun, à raison d'un groupe par couleur. Dans cet exemple, chaque groupe de BTS convient pour la gestion des communications dans 120 microsecteurs différents. Le réseau mobile couvert par le répartiteur peut alors comprendre 5x120=600 microsecteurs en tout.

Le local qui abrite la tête de réseau du système comporte cinq rangées de baies d'équipements électroniques, à raison d'une rangée de baies par couleur. Chacune des huit baies de chaque rangée contient les équipements électroniques nécessaires pour remplir les fonctions de BTS de même couleur déterminée. C'est pourquoi on les appelle baies de BTS.

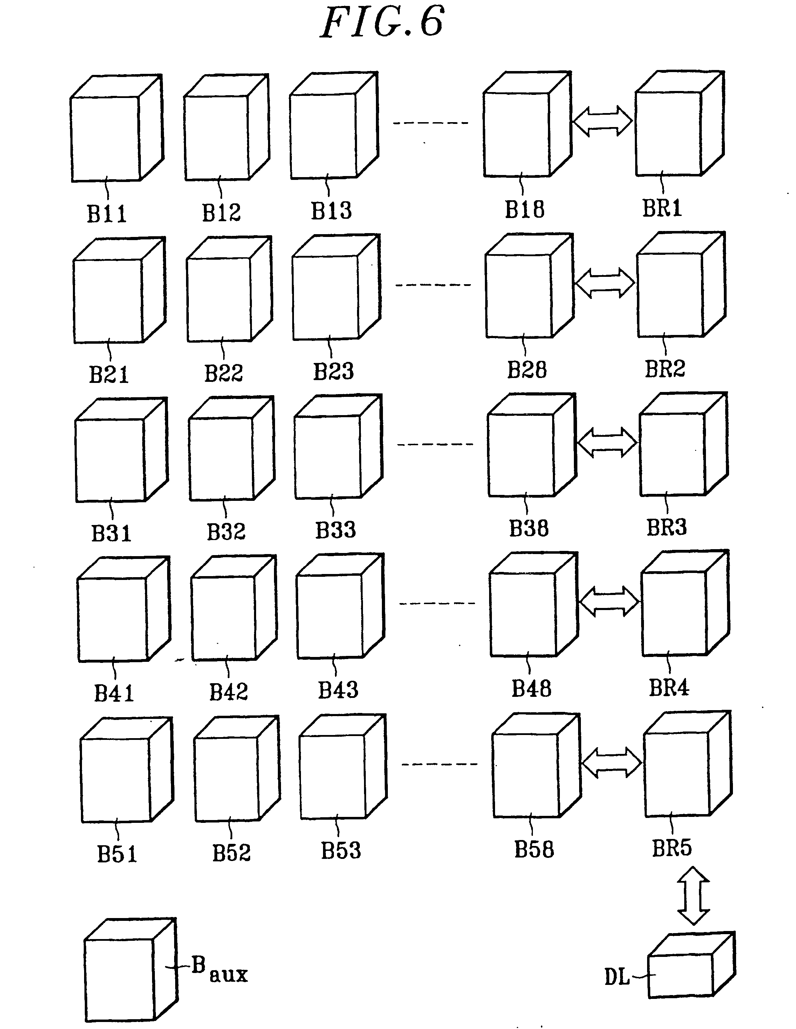

Le schéma de la figure 6, représente une disposition de baies de BTS, notées Bij, où i et j sont des nombres entiers se référant, respectivement, au numéro de la couleur et donc de la rangée, et au numéro de la baie de BTS dans la rangée de baies de BTS de cette couleur. Le nombre i est donc compris entre 1 et 5, alors que le nombre j est compris entre 1 et 8.

Le répartiteur 101 de la figure 3 comprend concrètement cinq baies d'équipements électroniques, ou baies de répartition, à raison de une baie de répartition par couleur et donc par rangée de baies de BTS. A la figure 6, les cinq baies de répartition sont notées BR1 à BR5 et sont représentées à droite des rangées de baies de BTS, respectivement B11 à B18, B21 à B28, B31 à B38, B41 à B48, et B51 à B58. En effet, une baie de répartition est associée à chaque groupe ou rangée de baies de BTS de même couleur.

Les baies de BTS comportent chacune une sortie (non représentée) sur laquelle elles délivrent un signal GSM tel que celui représenté à la figure 4. Les signaux GSM délivrés par les baies de BTS d'une même rangée sont transmis sur des entrées (non représentées, en nombre égal à huit) de la baie de répartition associée au groupe de BTS de cette couleur. Ce sont des signaux destinés à être transmis selon la voie descendante du système, aux relais locaux des microsecteurs auxquels la couleur des BTS de cette rangée est attribuée.

De même, chaque baie de répartition comporte huit sortie (non représentées) sur lesquelles elles délivrent des signaux GSM à destination, respectivement, des huit baies de BTS de la rangée de baies de BTS à laquelle elle est associée. Ces signaux GSM sont ceux transmis selon la voie montante du système, en provenance des relais locaux des microsecteurs auxquels est attribuée la couleur des BTS de cette rangée.

A la figure 6, les moyens de liaison entre les baies de BTS Bi1 à Bi8 de chaque rangée (référencée par le nombre i tel que ci-dessus) et la baie de répartition BRi associée à ce groupe de baies de BTS sont symbolisés par une double flèche horizontale. Ce sont des liaisons coaxiales.

La fonction des baies de répartition est de répartir les signaux GSM (ou canaux téléphoniques) délivrés par les BTS d'un même groupe entre les divers canaux de fréquence des moyens de liaison 120a-120b (figure 3) du système affectés aux microsecteurs auxquels est attribuée la couleur des BTS de ce groupe.

C'est pourquoi les baies de répartition BR1 à BR5 sont reliées (dans les deux sens) à un ensemble de transducteurs optiques, noté DL à la figure 6 par des moyens de liaison qui sont symbolisés par une double flèche verticale. Ces moyens de liaison sont des câbles coaxiaux.

Les transducteurs optiques comprennent des émetteurs optiques tels que des diodes lasers pour l'émission des canaux téléphoniques multiplexés sur les canaux de fréquence adaptés des fibres optiques qui constituent les moyens de liaison 120a-120B (figure 3) au départ de la tête de réseau (voie descendante). Les transducteurs optiques comprennent également des récepteurs optiques pour assurer la fonction inverse en ce qui concerne la voie montante.

Préférentiellement, on aura deux fois plus de fibres optiques pour relier les centres de distribution (CD) et la tête de réseau selon la voie montante qu'il n'en existe pour les relier selon la voie descendante. Chaque liaison entre un CD et la tête de réseau comporte en effet deux fibres optiques supportant chacune à peu près la moitié des émissions réalisées, mais pouvant supporter à elle seule la totalité de ces émissions; chaque CD comporte donc un récepteur optique et deux diodes laser.

Ceci permet, en cas de panne d'une des deux diodes laser dans un CD, d'affecter à l'autre diode laser, selon tous moyens appropriés, la totalité des émissions à effectuer. Le trafic porté par la liaison optique peut justifier une protection par redondance des émetteurs optiques placés au CD, pour éviter les interruptions du trafic en cas de panne d'un émetteur.

On notera que c'est un avantage de l'invention que de rendre superflue une telle redondance de sécurisation dans le cas de la voie descendante. En effet, toutes les diodes laser étant rassemblées dans la tête de réseau, plus exactement dans l'ensemble de transducteurs DL, une seule diode laser défectueuse peut être remplacée très rapidement par l'équipe de maintenance qui se trouve sur place en permanence. Le cas échéant, une seule diode laser supplémentaire peut être prévue pour assurer la sécurisation de toutes les diodes lasers de cet ensemble le temps d'assurer le remplacement de le diode laser défectueuse.

Dans la pratique, les rangées de BTS d'un même groupe sont préférentiellement disposées en arcs de cercles dans le local de la tête de réseau, l'ensemble DL de transducteurs optiques étant disposé au centre de ce cercle. De cette manière, les câbles coaxiaux dans ce local sont de longueur voisine et les plus courtes possibles, ce qui respectivement, évite d'avoir à utiliser des correcteurs d'affaiblissement et réduit les pertes sur ces câbles.

A la figure 6, on a également représenté une BTS auxiliaire Baux dont le rôle sera expliqué plus loin.

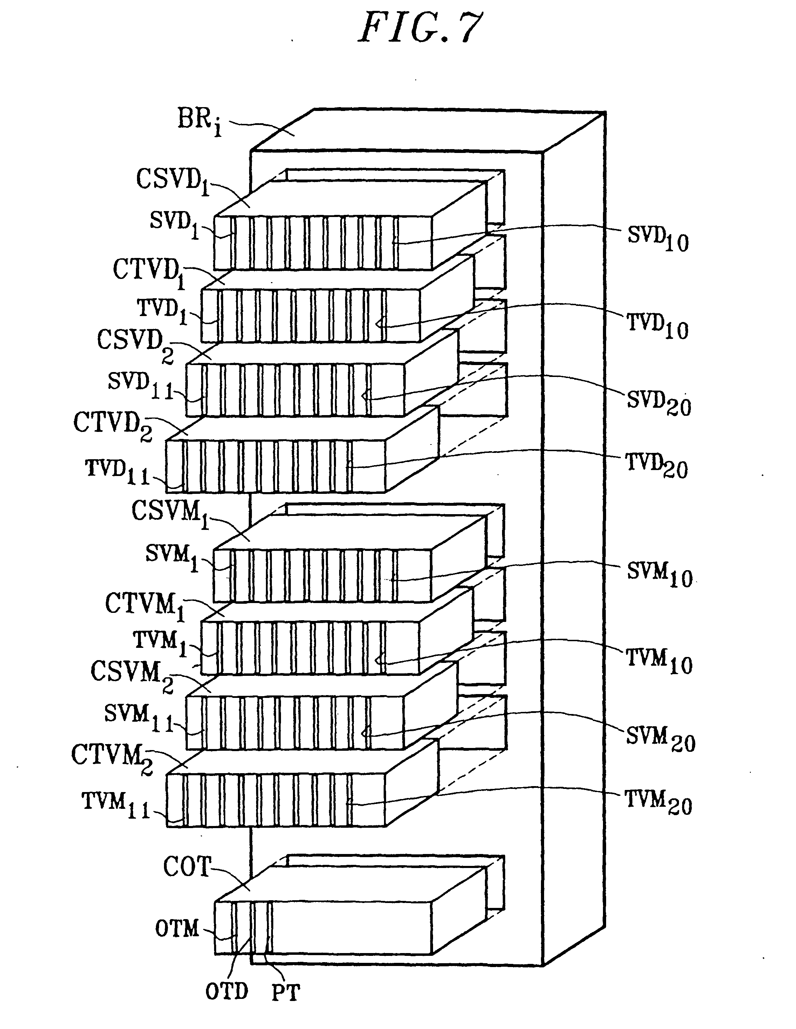

On va préalablement préciser la réalisation d'une baie de répartition, en se référant à la figure 7 sur laquelle une telle baie BRi a été représentée.

Pour chaque voie montante ou descendante, la baie BRi comprend 120 sélecteurs de une parmi huit entrées. Ces sélecteurs sont des moyens de sélection spatiales d'un parmi huit câbles coaxiaux.

Pour la voie descendante, ces sélecteurs sont par exemple disposés sur 20 cartes électroniques SVD₁ à SVD₂₀ portant chacune 6 sélecteurs, ci-après appelées cartes de sélection. Les cartes de sélection SVD₁ à SVD₂₀ sont rangées par groupes de 10 dans des châssis CSVD₁ et CSVD₂, ces deux châssis étant rangés dans la baie BRi.

Le signal GSM qui est délivré par chaque BTS est divisé par deux en fond de baie à l'aide d'un coupleur non représenté, puis a nouveau par 10 en fond de châssis à l'aide de coupleurs non représentés, et enfin par 6 sur chaque carte à l'aide de coupleurs également non représentés. Le signal ainsi divisé en puissance est ensuite porté sur l'une des huit entrées de chaque sélecteur.

Les cartes de sélection sont ensuite reliées à des cartes de transposition par exemple en nombre égal au nombre de cartes de sélection. A la figure 7, ces cartes de transposition pour la voie descendante sont référencées TVD₁ à TVD₂₀.

Chaque carte de transposition comporte six oscillateurs locaux pour générer les signaux de transposition dont la fréquence correspond à la fréquence de transposition d'un canal téléphonique sur le canal de fréquence des liaisons 120a-120b (figure 3) par fibre optique ou câble coaxial destiné à le recevoir. Chaque carte de transposition comporte également les six mélangeurs et les moyens de filtrage réalisant cette transposition.

Préférentiellement les liaisons entre les six sorties des cartes de sélection SVD₁ à SVD₂₀ et les six entrées correspondantes des cartes de transposition TVD₁ à TVD₂₀ sont réalisées, en face avant de la baie de répartition, par des nappes de six câbles coaxiaux non représentées. C'est pourquoi, ainsi qu'on l'a représenté à la figure 7, les châssis de cartes de sélection et les châssis de cartes de transposition sont préférentiellement disposés verticalement et de façon alternée dans la baie BRi.

Naturellement, la baie de répartition BRi comporte également des moyens équivalents aux cartes SVD₁ à SVD₂₀ et TVD₁ à TVD₂₀, ainsi qu'aux châssis CSVD₁, CSVD₂, CTVD₁, et CTVD₂ pour la voie montante. Ces moyens sont respectivement notés SVM₁ à SVM₂₀, TVM₁ à TVM₂₀, ainsi que CSVM₁, CSVM₂, CTVM₁, et CTVM₂.

Les moyens 102 d'observation du trafic du système comprennent, pour chaque groupe de BTS, une carte OTD d'observation du trafic descendant et une carte OTM d'observation du trafic montant. Ces cartes sont contenues dans un châssis COT de la baie de répartition BRi associée à ce groupe de BTS.

Préférentiellement, les moyens 102 d'observation du trafic, aussi bien montant que descendant, comprennent des moyens de transposition de fréquence avec pour oscillateur local un unique synthétiseur agile en fréquence au pas de 200 KHz, ainsi que des moyens de détection. Ce synthétiseur passe par toutes les fréquences de porteuses possibles des signaux GSM pendant la durée d'un IT (soit 0,577 ms). Ces moyens permettent de détecter successivement les canaux physiques sur lesquels il y a de l'énergie, ce qui traduit l'existence d'un trafic; cette détection se fait après transposition et filtrage à fréquence fixe, de largeur 100 KHz environ.

Dans un mode de réalisation particulier, le système comporte aussi des moyens de rapprochement des résultats fournis par les moyens d'observation du trafic montant d'une part et les résultats fournis par les moyens d'observation du trafic descendant d'autre part, pour distinguer l'activité des stations mobiles et l'activité des brouilleurs. En effet, une communication étant par nature bidirectionnelle, ces résultats doivent en principe être identiques. Toute différence mesurée entre la présence d'énergie sur les porteuses de la voie montante et celles de la voie descendante traduisent donc l'émission d'énergie radioélectrique par des brouilleurs.

Les moyens de rapprochement précités peuvent être utilisés à des fins d'analyse de la propagation radioélectrique dans les microsecteurs, dans le but, le cas échéant, d'améliorer le plan d'attribution des fréquences.

Dans un mode de réalisation possible, les moyens d'observation du trafic, notamment mais pas uniquement les moyens d'observation du trafic montant, comprennent en outre des moyens pour transposer les signaux GSM en bande vidéo et des moyens pour analyser en bande vidéo les fréquences où il y a de l'énergie. Ceci permet d'utiliser pour cette détection des équipements électroniques déjà à la disposition des hommes de l'art.

Les moyens de gestion du système comportent également des moyens de prévision de la charge des BTS. Ces moyens sont utiles car ils permettent de prendre en compte, par anticipation, l'évolution prévisible de la charge des BTS au moment où celles-ci sont reliées à tel ou tel (tels) relais local (locaux).

Dans un mode de réalisation préféré, ces moyens de prévision de la charge des BTS comportent une carte PT de comptage du nombre de stations mobiles présentes et en communication dans chaque microsecteur, de manière à rendre compte de la charge potentielle des BTS. Grâce à

ces moyens de prévision de la charge des BTS, on peut limiter la fréquence des basculements des communications entre BTS de même couleur.

En effet, la gestion du système selon le principe de l'invention requiert nécessairement que les communications dans un microsecteur qui sont supportées par une BTS donnée soient parfois basculées sur une autre BTS du même groupe, par exemple lorsque ladite BTS donnée approche de la saturation. Ces basculements sont bien entendu des étapes délicates qu'il convient de limiter à ce qui est indispensable pour assurer une répartition à peu près égale de la charge des BTS d'un même groupe.

Pour la réalisation des basculements des communications entre une première BTS, dite BTS cédante, et une seconde BTS du même groupe, dite BTS cessionnaire, le système comporte une ou plusieurs BTS auxiliaire(s).

Cette BTS auxiliaire supporte, de façon transitoire lors d'un basculement des communications, le trafic antérieurement supporté par la BTS cédante et postérieurement par la BTS cessionnaire. Dit autrement, la fonction de la BTS auxiliaire est de permettre le basculement des communications dans un microsecteur donné d'une BTS cédante à une BTS cessionnaire du même groupe, et ce sans interruption du trafic.

En effet, la BTS cédante et la BTS cessionnaire utilisent les mêmes porteuses radioélectriques puisqu'étant de même couleur. Le basculement direct des communications de l'une à l'autre n'est pas possible puisque, à un certain moment, les porteuses radioélectriques de l'une et l'autre devraient coexister dans le microsecteur pour qu'il n'y ait aucune interruption du trafic, ce qui est impossible s'agissant de porteuse radioélectriques de mêmes fréquences. La BTS auxiliaire utilise donc des porteuses radioélectriques de fréquences différentes de celles des BTS cédante et cessionnaire.

La mise en oeuvre de la BTS auxiliaire est la suivante :
- les porteuses de la BTS auxiliaire sont émises dans le microsecteur faisant l'objet du basculement entre la BTS cédante et la BTS cessionnaire;
- les communications sont progressivement basculées des canaux physiques des porteuses de la BTS cédante vers les canaux physiques des porteuses de la BTS auxiliaire, selon le même principe que pour un basculement intercellulaire (hand-over) ;
- une fois que plus aucune communication, n'est supportée par la BTS cédante, les moyens de sélection et de transposition du répartiteur sont modifiés pour relier le relais local du microsecteur non plus à la BTS cédante mais à la BTS cessionnaire;
- les communications sont ensuite progressivement basculées des canaux physiques des porteuses de la BTS auxiliaire vers les canaux physiques des porteuses de la BTS cessionnaire, selon le même principe que pour un basculement intercellulaire (hand-over).

Dans un mode de réalisation préféré, les porteuses radioélectriques utilisées par la BTS auxiliaire sont différentes de celles utilisées par toutes les BTS, sans distinction de couleur. De cette manière on évite tout risque de brouillage lors des basculements d'une BTS cédante à une BTS cessionnaire. Une seule BTS peut alors n'être nécessaire pour l'ensemble des BTS de la tête de réseau, c'est à dire pour les BTS de toutes les couleurs. Cette unique BTS est représentée à la figure 6 et porte la référence Bₐᵤₓ.

Néanmoins les porteuses radioélectriques de la BTS auxiliaire n'étant pas utilisées pour la transmission de communications en dehors des étapes de basculement entre une BTS cédante et une BTS cessionnaire, leur nombre est préférentiellement peu important, de manière à ne pas pénaliser le rendement global du système. En pratique, la BTS auxiliaire n'utilise que deux porteuses radioélectriques différentes (sans saut de fréquence). Dans ce cas, les moyens de gestion du système sont préférentiellement commandés de telle manière que ce soient les communications dans le microsecteur dans lequel il y a le moins de trafic qui fassent l'objet du basculement entre la BTS cédante et la BTS cessionnaire.

Cependant, d'autres modes de réalisation sont possibles, dans lesquels il existe une BTS auxiliaire pour chaque groupe de BTS. La BTS auxiliaire d'une groupe de BTS peut alors utiliser les porteuses radioélectriques utilisées par les BTS des autres groupes, c'est à dire des BTS de couleur différente de celle de la BTS cédante et de la BTS cessionnaire. Ce mode de réalisation présente l'avantage de ne pas nécessiter de porteuses radioélectriques à usage exclusif en tant que porteuses de la BTS auxiliaire. Néanmoins, les risques de brouillage entre les porteuses utilisées par une BTS auxiliaire dans un microsecteur et celles, de même fréquence, pouvant être simultanément utilisée dans des microsecteurs voisins, peuvent être difficiles à prévenir.

On va maintenant décrire la façon dont la couverture de la zone géographique par le système peut être adaptée pour tenir compte de l'augmentation du trafic moyen dans un microsecteur. En effet, il peut arriver que le trafic dans un microsecteur devienne à lui seul trop important pour une seule BTS, notamment si un quartier antérieurement peu fréquenté devient très fréquenté du fait par exemple de l'installation d'un nouvel établissement d'une entreprise, d'un grand magasin ou d'une sortie du réseau du métro.

Il devient alors nécessaire de partager le microsecteur en plusieurs microsecteurs indépendants, moyennant bien entendu une modification du plan d'attribution des fréquence.

Ceci peut se faire en ajoutant des cartes de sélection dans les baies de répartition dans la tête de réseau, et en installant dans les PAR de nouveaux coffrets de transposition pour chacune des fractions du microsecteur concerné. On rappelle que, par multiplexage fréquentiel des signaux GSM (890 à 960 MHz) et des signaux de réseau de télévision par câble (inférieurs à 862 MHz), un même coffret de transposition de fréquence peut alimenter plusieurs "interfaces air" (amplificateurs de puissance et antenne) placés sur la même arborescence coaxiale. Il est donc aisé, lorsque la gestion du trafic l'impose, de placer un coffret de transposition de fréquence supplémentaire pour une interface air précédemment alimentée à partir d'un autre coffret de transposition de fréquence. Ces coffrets de transposition de fréquence transposent des canaux téléphoniques depuis les fréquences du câble coaxial vers les fréquences de la bande GSM; les interfaces air comprennent un amplificateur de puissance et des moyens de couplage aux antennes. Ces moyens sont peu coûteux à installer, du moins bien moins coûteux qu'un nouveau site de base d'un système selon l'art antérieur.

De même, lorsque cela devient nécessaire, on peut ajouter des BTS dans la tête de réseau, dans tel ou tel groupe de BTS, ou bien dans tous les groupes de BTS, sans être obligés de revoir l'organisation du réseau de microsecteurs et des moyens de liaisons entre les relais locaux et la tête de réseau.

On voit donc que c'est un autre avantage de l'invention que de permettre une évolution des investissements qui tienne compte de l'évolution du trafic dans le temps, sans coût excessif puisque ne nécessitant pas de modifier en profondeur l'organisation du système. Cet avantage provient de la séparation entre la couverture de la zone géographique par le réseau de microsecteurs d'une part, et des ressources du système en termes de capacité d'écoulement du trafic d'autre part.

On a vu ci-dessus lors de la description des baies de répartition effectuée en regard de la figure 6, que, pour un plan de fréquence donné, l'affectation d'un microsecteur à un groupe de BTS est figée; lors des changements de plan d'attribution des fréquences consécutifs à des augmentations du nombre de microsecteurs, le couplage entre les sorties des baies de répartition et les câbles coaxiaux qui relient les transducteurs optiques ensemble, doit être modifié manuellement. En pratique cette opération peut se répéter plusieurs fois par an. Pour un groupe de huit BTS et quelques centaines de microsecteurs tel que celui envisagé dans l'exemple, ces opérations manuelles sont acceptables. Ce qui vient d'être exposé vaut aussi pour les moyens de liaison entre un groupe de BTS et la baie de répartition associée. De telles opérations réalisées manuellement ne sont toutefois plus raisonnablement envisageables pour des systèmes comprenant plus de huit BTS par groupe.

Néanmoins, on a vu qu'un système comportant cinq groupe de huit BTS chacun permet la gestion d'un réseau mobile comprenant 600 microsecteurs. Or, pour une ville comme Paris par exemple, cela ne représente que le quart de la surface de l'aire géographique à couvrir.

On peut bien entendu envisager de partager la ville à couvrir en quatre zones distinctes, chacune de ces zones étant couvertes par un système tel que décrit ci-dessus, formant en fait un sous-système. Dans ce cas, il faudrait prévoir quatre sites de tête de réseau, à raison de un par sous-système. On devrait également veiller à choisir des plans d'attribution des fréquences qui éliminent les risques de brouillages aux limites des zones de la ville couvertes par chaque sous-système.

Néanmoins cette solution présente l'inconvénient de réintroduire une notion d'attribution des ressources disponibles (les BTS) à des zones de taille déterminée (les quatre zones correspondant chacune au quart de la ville), cette attribution étant réalisée de manière figée entre les têtes de réseau de chaque sous-système.

C'est pourquoi on préfère une solution dans laquelle la zone couverte par le système est toujours unitaire, le système ne comprenant qu'une seule tête de réseau mais avec un nombre plus élevé de BTS par groupe.

Par exemple, pour la ville de Paris, on propose un système comprenant cinq groupes de BTS avec une centaine de BTS par groupe. Se pose alors le problème des interventions manuelles précitées. En effet, avec une centaine de BTS par groupe et de deux mille à quatre mille microsecteurs, ces interventions manuelles peuvent devenir inacceptables.

C'est pourquoi on peut envisager un autre mode de réalisation du répartiteur électronique et des moyens de liaison qui le relient aux baies de BTS dans le local de la tête de réseau.

En effet, on propose également un mode de réalisation dans lequel les signaux GSM délivrés par quelques 512 BTS sont multiplexés en fréquence indistinctement sur huit bus coaxiaux dans la bande de fréquence comprise entre 1000 et 2300 MHz. Chaque bus coaxial transmet ainsi une soixantaine de canaux téléphoniques différents qui occupent chacun une bande de fréquence de 8 MHz de large, par exemple soixante quatre canaux téléphoniques.

Ces huit bus coaxiaux sont reliés à des entrées de baies de répartition comprenant en tout 64 châssis de 10 cartes de sélections chacun, chaque carte de sélection comprenant 6 sélecteurs. C'est donc au total 3840 microsecteurs qui peuvent être reliés un ensemble de 520 BTS, à raison de 104 BTS par groupe ou couleur.

Des moyens de sélection spatiale (sélection d'un parmi les huit bus coaxiaux) et fréquentielle (sélection d'un canal parmi les 65 canaux transmis sur chaque bus) sont portés par les cartes de sélection qui sont donc plus complexes que dans le cas précédent.

Ces cartes de sélection restituent la bande GSM (935 à 942 MHz, par exemple) aux cartes de transposition. Tout microsecteur peut donc être rattaché sans intervention manuelle, à n'importe laquelle des BTS, par sélection spatiale et fréquentielle, qu'il s'agisse de répartir dans le courant d'une journée les microsecteurs entre les BTS de même couleur, ou qu'il s'agisse de modifier plusieurs fois par an le plan d'attribution des fréquences (affectation de couleurs aux microsecteurs), à la suite de la création de nouveaux microsecteurs.

Pour éviter d'amplifier le signal multiplexé dans la bande 1000 ou 2300 MHz, le couplage des sorties des 64 BTS sera avantageusement réalisé au moyen d'un coupleur à 64 entrées et 64 sorties réalisé par association de coupleurs 3dB. Plus précisément, un signal contenant, multiplexés en fréquence, les signaux GSM provenant de 2^{m} BTS (où m est un nombre entier), est généré par un coupleur 2^{m}X2^{m} formé de m étages de coupleurs 3dB interconnectés.

Dans ce second mode de réalisation, les liaisons entre les sorties des cartes de sélection et les moyens de liaisons entre la tête de réseau et les relais locaux sont identiques à celles du premier mode de réalisation du répartiteur décrit plus haut.

## Revendications

1. Système de radiocommunications cellulaire, notamment un système GSM 900 ou DCS 1800, dans lequel l'aire géographique couverte par le système est divisée en zones élémentaires, ou microsecteurs (US1 à US7), à chacune desquelles est attribué un groupe de porteuses radioélectriques, ou couleur, selon un plan d'attribution des fréquences déterminé,
**caractérisé en ce qu'**il comporte:
- des groupes de stations de base (111), ou BTS, assurant une fonction de modulation/démodulation, de transposition et de multiplexage/démultiplexage des porteuses de chaque couleur, physiquement installées sur une même tête de réseau (100);
- des équipements fixes d'amplification d'émission/réception radioélectriques, ou relais locaux (RL), installés dans chaque microsecteur et reliés à la tête de réseau par des moyens de liaison adaptés (120a, 120b)assurant la transmission, entre la tête de réseau (100) et les relais locaux, de signaux GSM multiplexés ;
- des moyens de gestion comprenant des moyens d'observation du trafic (102) pour rendre compte de la charge des BTS et/ou des microsecteurs pris individuellement ainsi qu'un répartiteur électronique (101) commandé pour relier les BTS aux relais locaux par l'intermédiaire des moyens de liaison de manière à égaliser la charge des BTS d'un même groupe.

2. Système selon la revendication 1, **caractérisé en ce que** le répartiteur (101) est commandé de manière à relier une BTS à plusieurs relais locaux (RL) correspondant à des microsecteurs géographiquement proches ou fortement couplés au sens de la propagation radioélectrique.

3. Système selon la revendication 1 ou selon la revendication 2, **caractérisé en ce que**, la propagation radioélectrique dans les microsecteurs étant de nature microcellulaire, le plan d'attribution des fréquences ne comporte que six, cinq ou quatre couleurs différentes.

4. Système selon la revendication 1 ou selon la revendication 3, **caractérisé en ce que** chaque couleur comporte une porteuse balise et cinq à huit porteuses de conversation dans une bande de 5 à 8 MHz de large.

5. Système selon l'une des revendications 1 4, **caractérisé en ce que** les moyens de liaison entre les BTS et les relais locaux comprennent des liaisons par câble ou fibre optique et/ou des liaisons par câble coaxial (120a-120b).

6. Système selon la revendication 5, **caractérisé en ce que** le répartiteur (101) comporte des moyens de transposition et de multiplexage/démultiplexage fréquentiel pour permettre la transmission, sur lesdites liaisons, de canaux téléphoniques correspondant aux signaux GSM.

7. Système selon la revendication 5, **caractérisé en ce que** les moyens de liaison entre les BTS et les relais locaux comprennent un réseau câblé pour la transmission de signaux de télévision.

8. Système selon la revendication 7, **caractérisé en ce que** le répartiteur (101) comporte des moyens de transposition et de multiplexage/démultiplexage fréquentiel pour permettre la transmission, sur le réseau câblé, dans des canaux de fréquence non occupés par les signaux de télévision, de canaux téléphoniques correspondant aux signaux GSM.

9. Système selon la revendication 6 ou 8, **caractérisé en ce que** le multiplexage regroupe sur des canaux de fréquence voisins les canaux téléphoniques associés à des microsecteurs desservis par une même arborescence coaxiale.

10. Système selon la revendication 9, **caractérisé en ce que** les groupes de canaux téléphoniques associés à des microsecteurs desservis par une même arborescence coaxiale sont, dans le spectre de la liaison optique, disposés de façon à laisser libres les bandes images de ces groupes.

11. Système selon la revendication 2, **caractérisé en ce que** les moyens d'observation du trafic comprennent des moyens de transposition de fréquence avec, pour oscillateur local, un unique synthétiseur agile en fréquence au pas de 200 KHz, passant par toutes les fréquences de porteuses possibles, ainsi que des moyens de détection pendant la durée d'un intervalle de temps, 0,577 ms.

12. Système selon l'une des revendications précédentes, **caractérisé en ce que** les moyens d'observation du trafic comprennent, pour chaque groupe de BTS, des moyens d'observation du trafic montant et des moyens d'observation du trafic descendant, ainsi que des moyens de rapprochement des résultats fournis par ces deux types de moyens d'observation pour distinguer l'activité des stations mobiles et l'activité des brouilleurs.

13. Système selon la revendications 12, **caractérisé en ce que** les moyens d'observation du trafic (102) comprennent en outre des moyens pour transposer les signaux GSM en bande vidéo et des moyens pour analyser en bande vidéo les fréquences où il y a de l'énergie.

14. Système selon l'une des revendications précédentes, **caractérisé en ce que** les moyens de gestion comportent également des moyens de prévision de la charge des BTS.

15. Système selon la revendication 14, **caractérisé en ce que** les moyens de prévision de la charge des BTS comportent une carte de comptage du nombre de stations mobiles présentes et en communication dans chaque microsecteur, de manière à rendre compte de la charge potentielle des BTS.

16. Système selon la revendication 1, **caractérisé en ce qu'**il comporte au moins une BTS auxiliaire pour supporter, de façon transitoire lors d'un basculement des communications d'une première BTS vers une seconde BTS du même groupe, le trafic antérieurement supporté par la première BTS et postérieurement par la seconde BTS.

17. Système selon la revendication 16 **caractérisé en ce qu'**il ne comporte qu'une seule BTS auxiliaire pour tous les groupes de BTS, utilisant des porteuses radioélectriques de fréquence différentes de celles utilisées par les autres BTS, sans distinction de groupe.

18. Système selon la revendication 17, **caractérisé en ce que** la BTS auxiliaire n'utilise que deux porteuses radioélectriques .

19. Système selon la revendication 16 **caractérisé en ce qu'**il comporte une BTS auxiliaire par groupe de BTS, la BTS auxiliaire d'un groupe de BTS utilisant les porteuses des BTS des autres groupes.

20. Système selon l'une des revendications précédentes, **caractérisé en ce que** des rangées de BTS d'un même groupe sont préférentiellement disposées en arcs de cercles dans le local abritant la tête de réseau, un ensemble (DL) de transducteurs étant disposé au centre de ce cercle.

21. Système selon l'une des revendications précédentes, **caractérisé en ce que** le répartiteur électronique (101) comporte des moyens de sélection spatiale, ou des moyens de sélection spatiale et fréquentielle.

22. Système selon la revendication 21 **caractérisé en ce qu'**il comprend 2^{m} BTS (111, 112, 115) et un coupleur 2^{m} x 2^{m} formé de m étages de coupleurs 3dB interconnectés, où m est un nombre entier.

## Patentansprüche

1. System für den Mobilfunkverkehr, insbesondere eine System GSM 900 oder DCS 1800, in welchem der durch das System abgedeckte geographische Flächenraum in elementare Zonen bzw. Mikroabschnitte (US1 bis US7) unterteilt ist, denen jeweils eine Gruppe von Funk- bzw. Farb-Trägerwellen gemäß einem Zuordnungsplan für bestimmte Frequenzen zugeordnet sind,
**dadurch gekennzeichnet, dass** dieses umfasst:
- Gruppen von Basisstationen (111) bzw. BTS, die eine Funktion der Modulation/Demodulation, der Transposition und des Multiplexing/Demultiplexing von Trägerwellen jeder Farbe sicher stellen und physisch auf ein und demselben Netzwerkkopf (100) installiert sind;
- feste Sende/Empfang-Funkverstärkungseinrichtungen bzw. lokale Relaisstationen (RL), die in jedem Mikroabschnitt installiert sind und mit dem Netzwerkkopf durch geeignete Verbindungsmittel (120a, 120b), welche die Übertragung von multiplexten GSM Signalen zwischen dem Netzwerkkopf (100) und den lokalen Relaisstationen sicher stellen, verbunden sind;
- Steuereinrichtungen, die aufweisen Mittel zur Verkehrbeobachtung (102), um die Belastung der BTS und/oder der Mikroabschnitte jeweils einzeln zu berücksichtigen, sowie einen elektronischen Verteiler (101), der so gesteuert wird, dass dieser die BTS mit den lokalen Relaisstationen mit Hilfe der Verbindungsmittel in der Weise verbindet, dass die Belastung der BTS ein und derselben Gruppe ausgeglichen wird.

2. System nach Anspruch 1, **dadurch gekennzeichnet, dass** der Verteiler (101) derart gesteuert wird, dass eine BTS mit mehreren lokalen Relaisstationen (RL) verbunden ist, die den geographisch nahen oder in Richtung der Funkübertragung fest angekoppelten Mikroabschnitten entsprechen.

3. System nach Anspruch 1 oder nach Anspruch 2, **dadurch gekennzeichnet, dass** die Funkübertragung in den Mikroabschnitten auf Mikrozellenebene erfolgt, wobei der Zuordnungsplan der Frequenzen nur sechs, fünf oder vier unterschiedliche Farben umfasst.

4. System nach Anspruch 1 oder nach Anspruch 3, **dadurch gekennzeichnet, dass** jede Farbe einen Markierungsträger und von fünf bis acht Gesprächsträger in einer Bandbreite von 5 bis 8 MHz umfasst.

5. System nach einem der Ansprüche 1 bis 4, **dadurch gekennzeichnet, dass** die Verbindungsmittel zwischen den BTS und den örtlichen Relaisstationen Kabel-oder Lichtleitfaserverbindungen und/oder Verbindungen mit Koaxialkabel (120a bis 120b) umfassen.

6. System nach Anspruch 5, **dadurch gekennzeichnet, dass** der Verteiler (101) Einrichtungen zum frequenzabhängigen Transponieren und Multiplexing/Demultiplexing umfasst, um die Übertragung von den GSM-Signalen entsprechenden Telefonkanälen auf diesen Verbindungen zu erlauben.

7. System nach Anspruch 5, **dadurch gekennzeichnet, dass** die Verbindungsmittel zwischen den BTS und den lokalen Relaisstationen ein Kabelnetz zur Übertragung von Fernsehsignalen umfassen.

8. System nach Anspruch 7, **dadurch gekennzeichnet, dass** der Verteiler (101) Mittel zum frequenzabhängigen Transponieren und Multiplexing/Demultiplexing umfasst, um die Übertragung von den GSM-Signalen entsprechenden Telefonkanälen über das Kabelnetz in nicht durch die Fernsehsignale belegte Frequenzkanäle zu erlauben.

9. System nach Anspruch 6 oder 8, **dadurch gekennzeichnet, dass** das Multiplexing die Telefonkanäle, die den durch ein und denselben Koaxialbaum versorgten Mikroabschnitten zugeordnet sind, auf benachbarten Frequenzkanälen neu gruppiert.

10. System nach Anspruch 9, **dadurch gekennzeichnet, dass** die Gruppen von Telefonkanälen, die den durch ein und denselben Koaxialbaum versorgten Mikroabschnitten zugeordnet sind, innerhalb des Spektrums der optischen Verbindung in der Weise angeordnet sind, dass die Spiegelbänder dieser Gruppen frei bleiben.

11. System nach Anspruch 2, **dadurch gekennzeichnet, dass** die Mittel zur Verkehrsbeobachtung Mittel zur Transposition einer Frequenz mit, für eine lokale Oszillatoreinrichtung, einer einzigen in einem Schritt von 200 kHz frequenzagilen Abstimmeinrichtung, die von allen möglichen Trägerfrequenzen durchlaufen wird, sowie Mittel zur Erfassung während der Dauer eines Zeitintervalls von 0,577 ms umfasst.

12. System nach einem der vorstehenden Ansprüche, **dadurch gekennzeichnet, dass** die Mittel zur Verkehrsbeobachtung für jede Gruppe von BTS aufweist Mittel zur Beobachtung des zunehmenden Verkehrs und Mittel zur Beobachtung des abnehmenden Verkehrs sowie Mittel zur Näherung der durch diese zwei Typen von Beobachtungsmitteln gelieferten Resultate, um die Aktivität der mobilen Stationen und die Aktivität der Störgeräusche zu auseinander zu halten.

13. System nach Anspruch 12, **dadurch gekennzeichnet, dass** die Mittel zur Verkehrsbeobachtung (102) Mittel aufweisen, um die GSM-Signale in ein Videoband zu transponieren, und Mittel, um im Videoband die Frequenzen zu analysieren, auf welchen Energie vorhanden ist.

14. System nach einem der vorstehenden Ansprüche, **dadurch gekennzeichnet, dass** die Steuereinrichtungen auch Mittel zur Prognose der Belastung der BTS umfassen.

15. System nach Anspruch 14, **dadurch gekennzeichnet, dass** die Mittel zur Prognose der Belastung der BTS eine Karte zur Zählung der Anzahl von in jedem Mikroabschnitt vorhandenen und in Kommunikation befindlichen mobilen Stationen umfassen, derart, dass die potentielle Belastung der BTS berücksichtigt wird.

16. System nach Anspruch 1, **dadurch gekennzeichnet, dass** dieses wenigstens eine untergeordnete BTS umfasst, um bei einem Kippen von Kommunikationen einer ersten BTS in Richtung einer zweiten BTS derselben Gruppe den vorher durch die erste BTS und nachher durch die zweite BTS unterstützten Verkehr übergangsweise zu unterstützen.

17. System nach Anspruch 16, **dadurch gekennzeichnet, dass** dieses nur eine einzige untergeordnete BTS für alle BTS-Gruppen umfasst, welche Funkwellen von unterschiedlicher Frequenz zu denjenigen, die von den anderen BTS genutzt werden, ohne Unterscheidung der Gruppe nutzt.

18. System nach Anspruch 17, **dadurch gekennzeichnet, dass** die untergeordnete BTS nur zwei Funkwellen nutzt.

19. System nach Anspruch 16, **dadurch gekennzeichnet, dass** dieses eine untergeordnete BTS pro Gruppe von BTS nutzt, wobei die untergeordnete BTS einer Gruppe von BTS die Trägerwellen der BTS anderer Gruppen nutzt.

20. System nach einem der vorstehenden Ansprüche, **dadurch gekennzeichnet, dass** die BTS-Bereiche ein und derselben Gruppe in dem Raum, der den Netzwerkkopf beinhaltet, vorzugsweise kreisbogenförmig angeordnet sind, wobei eine Einheit (DL) von Wandlern im Zentrum des Kreises angeordnet ist.

21. System nach einem der vorstehenden Ansprüche, **dadurch gekennzeichnet, dass** der elektronische Verteiler (101) Mittel zur Raumauswahl oder Mittel zur Raum-und Frequenzauswahl umfasst.

22. System nach Anspruch 21, **dadurch gekennzeichnet, dass** dieses 2^{m} BTS (111, 112, 115) und einen 2^{m} x 2^{m}-Koppler umfasst, der m-Stufen von miteinander verbundenen 3dB-Kopplern bildet, wobei m eine ganze Zahl ist.

## Claims

1. Cellular radiocommunication system, in particular a GSM 900 or DCS 1800 system, in which the geographical area covered by the system is divided into elementary zones, or microsectors (US1 to US7), to each of which is allocated a group of RF carriers, or colour, according to a determined plan for allocating frequencies,
**characterized in that** it comprises:
- groups of base stations (111), or BTS, ensuring a function of modulation/demodulation, of transposition and of multiplexing/demultiplexing of the carriers of each colour, physically installed on one and the same network head (100);
- fixed RF transmit/receive amplification equipment, or local relays (RL), installed in each microsector and linked to the network head by suitable means of linking (120a, 120b) ensuring the transmission, between the network head (100) and the local relays, of multiplexed GSM signals;
- means of management comprising traffic observation means (102) for reporting the loading of the BTSs and/or of the microsectors taken individually as well as an electronic distributor (101) controlled so as to link the BTSs to the local relays by way of the linking means so as to equalize the loading of the BTSs of one and the same group.

2. System according to Claim 1, **characterized in that** the distributor (101) is controlled in such a way as to link a BTS to several local relays (RL) corresponding to microsectors that are geographically close or strongly coupled within the sense of RF propagation.

3. System according to Claim 1 or according to Claim 2, **characterized in that**, the RF propagation in the microsectors being of a microcellular nature, the frequency allocation plan comprises just six, five or four different colours.

4. System according to Claim 1 or according to Claim 3, **characterized in that** each colour comprises a beacon carrier and five to eight conversation carriers in a band of from 5 to 8 MHz wide.

5. System according to one of Claims 1 to 4,
**characterized in that** the means of linking between the BTSs and the local relays comprise cable or fibre optic links and/or coaxial cable links (120a-120b).

6. System according to Claim 5, **characterized in that** the distributor (101) comprises means of frequency transposition and multiplexing/demultiplexing so as to allow the transmission, over the said links, of telephone channels corresponding to the GSM signals.

7. System according to Claim 5, **characterized in that** the means of linking between the BTSs and the local relays comprise a cable network for the transmission of television signals.

8. System according to Claim 7, **characterized in that** the distributor (101) comprises means of frequency transposition and multiplexing/demultiplexing so as to allow the transmission, over the cable network, in frequency channels that are not occupied by the television signals, of telephone channels corresponding to the GSM signals.

9. System according to Claim 6 or 8, **characterized in that** the multiplexing groups together on neighbouring frequency channels the telephone channels associated with microsectors served by one and the same coaxial tree.

10. System according to Claim 9, **characterized in that** the groups of telephone channels associated with microsectors served by one and the same coaxial tree are, in the spectrum of the optical link, disposed in such a way as to leave free the image bands of these groups.

11. System according to Claim 2, **characterized in that** the traffic observation means comprise means of frequency transposition with, for local oscillator, a single frequency-agile synthesizer with a spacing of 200 KHz, passing through all the possible carrier frequencies, as well as means of detection over the duration of a time interval, 0.577 ms.

12. System according to one of the preceding claims, **characterized in that** the traffic observation means comprise, for each group of BTSs, means of observation of the up traffic and means of observation of the down traffic, as well as means of comparing the results provided by these two types of observation means so as to distinguish the activity of the mobile stations and the activity of jammers.

13. System according to Claim 12, **characterized in that** the traffic observation means (102) furthermore comprise means for transposing the GSM signals into video band and means for analyzing in video band the frequencies where there is energy.

14. System according to one of the preceding claims,
**characterized in that** the management means also comprise means of forecasting the loading of the BTSs.

15. System according to Claim 14, **characterized in that** the means of forecasting the loading of the BTSs comprise a card for counting the number of mobile stations present and communicating in each microsector, so as to report the potential loading of the BTSs.

16. System according to Claim 1, **characterized in that** it comprises at least one auxiliary BTS for supporting, in a transient manner when switching communications from a first BTS to a second BTS of the same group, the traffic supported previously by the first BTS and subsequently by the second BTS.

17. System according to Claim 16, **characterized in that** it comprises just one auxiliary BTS for all the groups of BTSs, using RF frequency carriers different to those used by the other BTSs, without distinction of group.

18. System according to Claim 17, **characterized in that** the auxiliary BTS uses only two RF carriers.

19. System according to Claim 16, **characterized in that** it comprises an auxiliary BTS per group of BTSs, the auxiliary BTS of a group of BTSs using the carriers of the BTSs of the other groups.

20. System according to one of the preceding claims, **characterized in that** rows of BTSs of one and the same group are preferably disposed in arcs of circles in the premises accommodating the network head, a set (DL) of transducers being disposed at the centre of this circle.

21. System according to one of the preceding claims, **characterized in that** the electronic distributor (101) comprises means of spatial selection, or means of spatial and frequency selection.

22. System according to Claim 21, **characterized in that** it comprises 2^{m} BTS (111, 112, 115) and a 2^{m} × 2^{m} coupler formed of m stages of interconnected 3dB couplers, where m is an integer.
